# EUROPEAN PATENT APPLICATION

(11) **EP 3 324 073 A1**
(43) Date of publication of application: **23.05.2018**
(21) Application number: 16824506.6
(22) Date of filing: 13.07.2016
(51) Int. Cl.: F16F 9/46, F16F 9/34, F16K 31/06, F16K 31/42

(54) **DAMPING VALVE AND SHOCK ABSORBER PROVIDED WITH DAMPING VALVE**

(30) Priority: 13.07.2015 JP 2015139623
(71) Applicant: KYB Corporation, Tokyo 105-6111 (JP)
(72) Inventor: HAGIDAIRA, Shinichi, Tokyo 105-6111 (JP); SAKUTA, Atsushi, Tokyo 105-6111 (JP)
(74) Representative: Grünecker Patent- und Rechtsanwälte PartG mbB
(86) International application number: PCT/JP2016/070733
(87) International publication number: WO 2017/010526

(57) **Abstract**

A damping valve (V1) includes: an electromagnetic valve (EV) having: a pressure control valve (PV) that controls a pressure of an upstream side of the pressure control passage (PP); a shut-off valve (SV) integrated into the pressure control valve (PV) and provided in an upstream side of the pressure control valve (PV) of the pressure control passage (PP) to open and close the pressure control passage (PP); and a single solenoid (Sol) that controls the pressure control valve (PV) and the shut-off valve (SV); and a first failsafe valve (FV1) provided in a first failsafe passage (FP1) to apply a resistance to a flow of fluid passing therethrough. When the solenoid is not energized, the pressure control valve (PV) opens the pressure control passage (PP) and the shut-off valve (SV) closes the pressure control passage (PP).

## Description

### TECHNICAL FIELD

The present invention relates to a damping valve and a shock absorber provided with a damping valve.

### BACKGROUND ART

As a damping valve, a variable damping valve capable of changing a damping force of a shock absorber interposed between a chassis and an axle of a vehicle is employed in some cases. For example, the applicant has already filed a patent application regarding such a damping valve (for example, see JP2014-173716A). This damping valve includes an annular valve seat that surrounds a port connected from a cylinder to a reservoir of the shock absorber, a main valve body that is stacked on the valve seat member and separates from or sits on the annular valve seat to open and close the port, a pilot passage branching from the upstream of the port, an orifice provided in the pilot passage, a tubular spool abutting on a side of the main valve body opposite to the valve seat, a valve housing slidably installed with the spool in its outer circumference to form a back-pressure chamber in the backside of the main valve body along with the spool, a pilot valve provided in the pilot passage, and a solenoid that controls a valve-opening pressure of the pilot valve. This damping valve introduces a secondary pressure of the downstream of the orifice of the pilot passage into the back-pressure chamber to press the main valve body toward the annular valve seat side with this secondary pressure.

In this damping valve, since the pilot valve is provided in the downstream of the back-pressure chamber, the secondary pressure guided to the back-pressure chamber is controlled to the valve-opening pressure of the pilot valve by controlling the valve-opening pressure of the pilot valve using a drive force of the solenoid.

As described above, a secondary pressure is applied to the backside of the main valve body to press the main valve body toward the annular valve seat side. In comparison, a pressure is applied from the upstream of the port to the front side of the main valve body to allow the main valve body to separate from the annular valve seat. As a result, if a force of separating the main valve body from the annular valve seat by virtue of the pressure of the upstream side of the port is stronger than the force of pressing the main valve body toward the valve seat by virtue of the secondary pressure, the damping valve is opened.

In this damping valve, the valve-opening pressure of the main valve body can be controlled by controlling the secondary pressure. In addition, if the valve-opening pressure of the pilot valve is controlled using the solenoid, a resistance applied from the damping valve to the flow of the working oil passing through a flow passage can be set variably. Therefore, it is possible to adjust the damping force of the shock absorber to a desired damping force.

### SUMMARY OF INVENTION

In this damping valve of the prior art, the damping force is adjusted by controlling the valve-opening pressure of the pilot valve. In addition, if a failure such as a case where energization to the solenoid becomes impossible occurs, this pilot valve fully recedes from the valve seat provided in the pilot passage and also serves as a shut-off valve for closing the downstream of the valve seat of the pilot passage.

This damping valve is provided with a failsafe passage branching from the upstream of a portion of the pilot valve serving as a shut-off valve in the downstream of the pilot valve of the pilot passage. In addition, when the pilot passage is shut off as the pilot valve recedes from the valve seat, the secondary pressure is controlled by a failsafe valve provided in a failsafe passage, so that the valve-opening pressure of the main valve body is set to a predetermined pressure. Therefore, the damping valve controls the pressure of the back-pressure chamber using the failsafe valve to generate a damping force even in the event of a failure.

That is, this damping valve has a pilot valve having a structure in which the pressure control valve that controls a pressure of the back-pressure chamber in a normal state and the shut-off valve that shuts off the pilot passage and enables the failsafe passage in the event of a failure are integrated. A function of the pilot valve as of the pressure control valve is activated by changing a distance from the valve seat to control the valve-opening pressure by virtue of the drive force of the solenoid and constantly maintain a difference between the upstream and downstream pressures of the pilot passage. In addition, a function of the pilot valve as the shut-off valve is activated when the pilot valve abuts on a flange provided in the inner circumference of the downstream of the pilot passage and closes the pilot passage as the pilot valve fully recedes from the valve seat. If the pilot valve is configured in this manner, the pressure control using the pressure control valve and the open/close control of the pilot passage using the shut-off valve can be accomplished by a single solenoid advantageously.

However, if a flow rate passing through the pilot valve from the upstream of the pilot passage increases, a differential pressure in a gap with the flange increases, and a pressure between the pressure control valve and the shut-off valve increases, so that the pilot valve is pressed toward the flange side. As a result, even in a normal state, the state may change to a failure state in which the shut-off valve is closed.

In this case, if the flow rate decreases, the state automatically returns to the normal state from the failure state. However, in this failure state, a control using the pressure control valve is not effective, and the pressure of the back-pressure chamber is controlled by the failsafe valve. Therefore, the damping force may not be controlled until the normal state is recovered.

In order to avoid such a problem, the failsafe passage may be provided to bypass the pilot valve. However, in this case, the failsafe passage and the pilot valve are arranged in parallel. For this reason, a pressure adjustment range of the pilot valve is reduced if the valve-opening pressure of the failsafe valve provided in the failsafe passage is not set to be higher than an upper limit pressure adjusted by the control of the pilot valve. If the pressure adjustment range of the pilot valve is secured in this manner, it is necessary to increase the valve-opening pressure of the failsafe valve. Therefore, the pressure of the back-pressure chamber in a failure state increases over the pressure of the normal state, and the damping force generated by the damping valve becomes higher in the event of a failure relative to the normal state. In this manner, in this structure, another problem occurs, in which it is difficult to freely set a damping force characteristic of the damping valve in a failure state.

It is therefore an object of the present invention is to provide a damping valve capable of freely setting a damping force characteristic in a failure state.

According to an aspect of the invention, there is provided a damping valve including: a pressure control passage; an electromagnetic valve having a pressure control valve that controls a pressure of an upstream side of the pressure control passage, a shut-off valve integrated into the pressure control valve and provided in an upstream side of the pressure control valve of the pressure control passage to open and close the pressure control passage, and a single solenoid that controls the pressure control valve and the shut-off valve; a first failsafe passage that branches from an upstream of the shut-off valve of the pressure control passage and is connected between the shut-off valve and the pressure control valve of the pressure control passage; and a first failsafe valve provided in the first failsafe passage to apply a resistance to a flow of fluid passing therethrough, wherein, when the solenoid is not energized, the pressure control valve is configured to open the pressure control passage and the shut-off valve is configured to the pressure control passage.

### BRIEF DESCRIPTION OF DRAWINGS

FIG. 1 is a circuit diagram illustrating a damping valve according to a first embodiment of the invention;
FIG. 2 is a cross-sectional view illustrating a shock absorber provided with the damping valve according to the first embodiment of the invention;
FIG. 3 is a graph illustrating flow-rate/pressure characteristic of a pressure control valve and a pressure/flow-rate characteristic of a first failsafe valve according to the first embodiment of the invention;
FIG. 4 is a graph illustrating a damping force range that can be output from the shock absorber provided with the damping valve according to the first embodiment of the invention at a piston speed in a normal operation and a damping force that can be output at a piston speed in the event of a failure;
FIG. 5 is a circuit diagram illustrating a damping valve according to a modification of the first embodiment of the invention;
FIG. 6 is a graph illustrating a damping force characteristic output from the shock absorber provided with the damping valve according to a modification of the first embodiment of the invention at a piston speed in the event of a failure;
FIG. 7 is a circuit diagram illustrating a damping valve according to a second embodiment of the invention;
FIG. 8 is a cross-sectional view illustrating a shock absorber provided with the damping valve according to the second embodiment of the invention;
FIG. 9 is a graph illustrating a damping force characteristic output from the shock absorber provided with the damping valve according to the second embodiment of the invention at a piston speed in the event of a failure;
FIG. 10 is a cross-sectional view illustrating a shock absorber provided with the damping valve according to the second embodiment of the invention;
FIG. 11 is a partial enlarged cross-sectional view illustrating the shock absorber provided with the damping valve according to the second embodiment of the invention;
FIG. 12 is an enlarged cross-sectional view illustrating the damping valve according to the second embodiment of the invention; and
FIG. 13 is a graph illustrating a damping force characteristic of the shock absorber provided with the damping valve according to the second embodiment of the invention.

### DESCRIPTION OF EMBODIMENTS

### <First Embodiment>

A damping valve V1 and a shock absorber D1 provided with damping valve V1 according to a first embodiment of the invention will now be described with reference to the accompanying drawings.

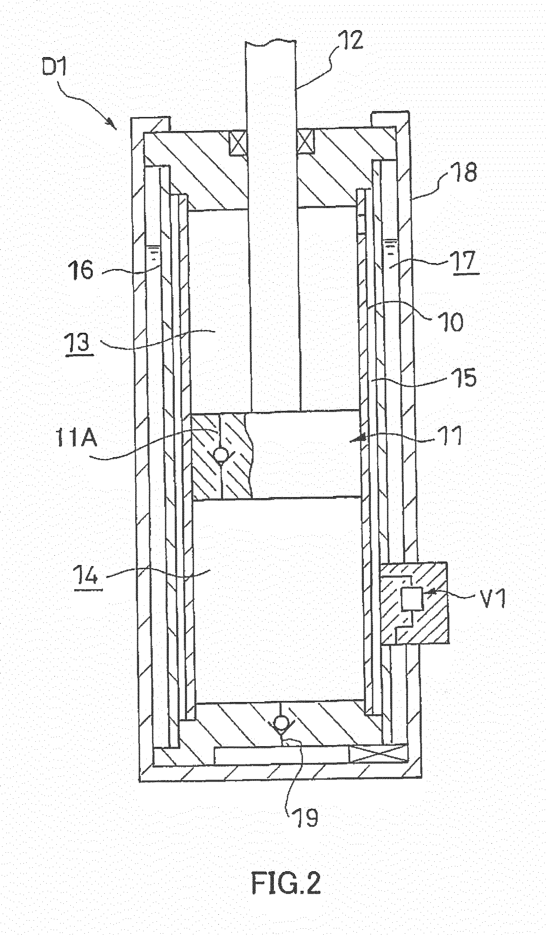

First, a shock absorber D1 provided with a damping valve V1 according to the first embodiment will be described. As illustrated in FIG. 2, the shock absorber D1 includes a cylinder 10, a piston 11 slidably inserted into the cylinder 10, a rod 12 slidably inserted into the cylinder 10 and connected to the piston 11, an extension-side chamber 13 and a contraction-side chamber 14 partitioned by the piston 11 inserted into the cylinder 10, an intermediate tube 16 that covers an outer circumference of the cylinder 10 to form a discharge passage 15 with the cylinder 10, and an outer tube 18 that covers an outer circumference of the intermediate tube 16 to form a reservoir 17 with the intermediate tube 16. The extension-side chamber 13, the contraction-side chamber 14, and the reservoir 17 are filled with working oil oil as a hydraulic fluid. In addition, the reservoir 17 is also filled with a gas in addition to the working oilworking oil. Note that the hydraulic fluid may include any type of fluid that can exert a damping force other than the working oil.

The extension-side chamber 13 and the discharge passage 15 communicate with each other through a communication hole provided in the cylinder 10. The extension-side chamber 13 communicates with the reservoir 17 through the discharge passage 15 and a main passage MP of the damping valve V1 described below. In the shock absorber D1, the extension-side chamber 13 is located in the upstream of the main passage MP, and the reservoir 17 is located in the downstream of the main passage MP.

The shock absorber D1 further includes an inlet passage 19 that allows only a flow of the working oilworking oil directed from the reservoir 17 to the contraction-side chamber 14, and a piston passage 11A provided in the piston 11 to allow only a flow of the working oilworking oil directed from the contraction-side chamber 14 to the extension-side chamber 13.

When the shock absorber D1 makes a contracting operation, the piston 11 moves downward in FIG. 2, so that the contraction-side chamber 14 is compressed, and the working oil in the contraction-side chamber 14 moves toward the extension-side chamber 13 through the piston passage 11A. In this contracting operation, the rod 12 intrudes into the cylinder 10, so that the working oil becomes excessive as much as a volume of the rod 12 intruding into the cylinder 10. This excessive amount of the working oil is extracted from the cylinder 10 and is discharged to the reservoir 17 through the discharge passage 15 and the main passage MP. In the contracting operation, the damping valve V1 of the shock absorber D1 applies a resistance to the flow of the working oil moving from the cylinder 10 to the reservoir 17 so as to increase a pressure of the cylinder 10 and exert a contraction-side damping force.

In comparison, when the shock absorber D1 makes an extending operation, the piston 11 moves upward in FIG. 2, so that the extension-side chamber 13 is compressed, and the working oil in the extension-side chamber 13 moves to the reservoir 17 through the discharge passage 15 and the main passage MP. In this extending operation, the piston 11 moves upward, and the volume of the contraction-side chamber 14 increases. The working oil corresponding to this increasing volume is supplied from the reservoir 17 through the inlet passage 19. In the extending operation, the damping valve VI of the shock absorber D1 applies a resistance to the flow of the working oil moving from the cylinder 10 to the reservoir 17 so as to increase a pressure of the extension-side chamber 13 and exert an extension-side damping force.

In this manner, when the shock absorber D1 makes an extending or contracting operation, the shock absorber D1 is set as a uniflow type in which the working oil is discharged from the cylinder 10 to the reservoir 17 through the discharge passage 15, and the working oil is circulated in one direction from the contraction-side chamber 14, to the extension-side chamber 13, and to the reservoir 17. In the shock absorber D1, since the working oil necessarily passes through the damping valve V1, damping forces of both the extending and contracting sides can be generated by the single damping valve V1.

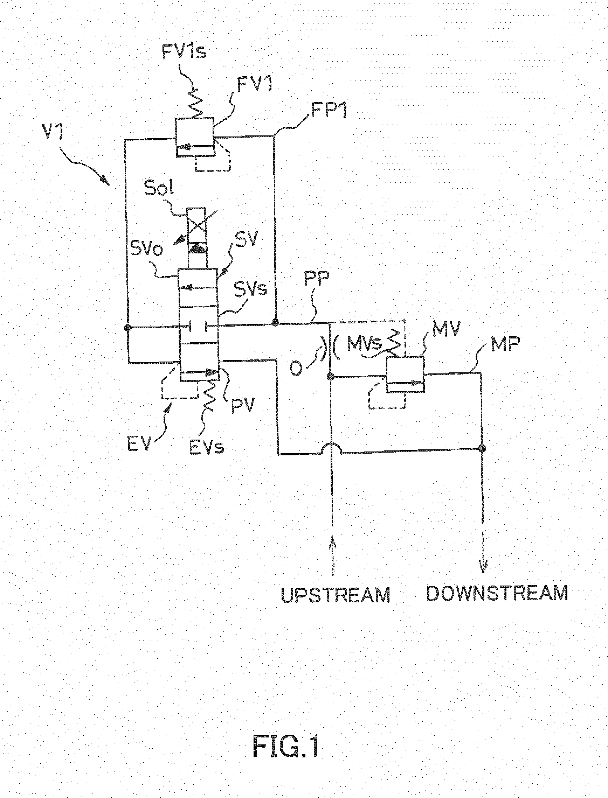

Next, the damping valve V1 will be described with reference to FIG. 1.

As illustrated in FIG. 1, the damping valve V1 includes a pressure control passage PP provided with an orifice O, an electromagnetic valve EV having a pressure control valve PV provided in the downstream of the orifice O of the pressure control passage PP to control a pressure of the upstream side of the pressure control passage PP, a shut-off valve SV integrated to the pressure control valve PV and provided in the upstream side of the pressure control valve PV of the pressure control passage PP to open and close the pressure control passage PV, and a single solenoid Sol for controlling the pressure control valve PV and the shut-off valve SV, a first failsafe passage FP1 that is branched from the pressure control passage PP at a point between the orifice O and the shut-off valve SV and is connected to the pressure control passage PP at a point between the shut-off valve SV and the pressure control valve PV, and a first failsafe valve FV1 provided in the first failsafe passage FP1 to apply a resistance to a flow of the fluid passing through the first failsafe passage FP1. The first failsafe passage FP1 is provided to bypass the shut-off valve SV.

The damping valve V1 has a main passage MP through which a fluid passes during an extending or contracting operation of the shock absorber D1, and a main valve MV that opens and closes the main passage MP. The damping valve V1 guides the pressure adjusted by the pressure control valve PV as a back pressure applied to the main valve MV to adjust a valve-opening pressure of the main valve MV. The shock absorber D1 generates a damping force by applying a resistance to the fluid passing through the main passage MP using the main valve MV during an extending or contracting operation.

Note that, according to this embodiment, the valve-opening pressure of the main valve MV is controlled by adjusting a pressure of the upstream side of the pressure control passage PP using the pressure control valve PV. However, the pressure control valve PV is capable of the pressure control as described above. Therefore, the damping valve V1 may be configured by removing the orifice O, the main passage MP, and the main valve MV from the aforementioned configuration. In this case, in an extending or contracting operation of the shock absorber D1, the damping force may be generated by controlling the pressure of the shock absorber D1 by applying a resistance to a fluid passing through the pressure control passage PP using the pressure control valve PV.

Next, each part of the damping valve V1 will be described in details.

As illustrated in FIG. 1, the main passage MP allows the extension-side chamber 13 of the cylinder 10 to communicate with the reservoir 17 through the discharge passage 15 in the shock absorber D1. The main valve MV is provided in the main passage MP, so that a pressure of the upstream side is applied to the main valve MV in a valve open direction, and a pressure of the upstream side of the pressure control valve PV of the pressure control passage PP is reduced by the orifice O and is applied as a back pressure in a valve close direction. In addition, a biasing force of the spring MVs is applied to the main valve MV in the valve close direction. When a force of opening the main valve MV by virtue of the pressure of the upstream side of the main passage MP is stronger than a force of closing the main valve MV by virtue of the back pressure and the effect of the spring MVs, the main valve MV is opened to apply a resistance to a flow of the working oil passing therethrough.

The pressure control passage PP branches from the upstream of the main valve MV of the main passage MP and is connected to the reservoir 17 located in the downstream of the main valve MV. In addition, an orifice O such as an orifice or chalk is provided in the pressure control passage PP, so that a pressure of the downstream side of the orifice O is applied to the main valve MV as a back pressure.

The electromagnetic valve EV obtained by integrating the pressure control valve PV and the shut-off valve SV is provided in the downstream side of the orifice O of the pressure control passage PP. The pressure control valve PV is provided in the pressure control passage PP and receives a pressure of the upstream side of the pressure control valve PV in the downstream of the orifice O of the pressure control passage PP and a biasing force of the spring EVs applied in a valve open direction and a drive force of the solenoid Sol applied in a valve close direction. In the damping valve V1, the valve-opening pressure of the main valve MV can be changed by adjusting the drive force of the solenoid Sol. Specifically, the valve-opening pressure of the pressure control valve PV can be controlled by adjusting the drive force of the solenoid Sol, and the valve-opening pressure of the main valve MV can be controlled by adjusting the back pressure applied to the main valve MV (the pressure of the upstream side of the pressure control valve PV in the downstream of the orifice O of the pressure control passage PP). Note that, when the solenoid Sol is not energized, the pressure control valve PV fully opens the flow passage using the spring EVs.

The shut-off valve SV is disposed in the upstream of the pressure control valve PV and the downstream of the orifice O of the pressure control passage PP. The shut-off valve SV has a shut-off position SVs in which the pressure control passage PP is shut off, and a communicatable position SVo in which the pressure control passage PP is opened. The shut-off valve SV is biased by the spring EVs shared with the pressure control valve PV to be located in the shut-off position SVs. When the shut-off valve SV is pressed by the drive force of the solenoid Sol shared with the pressure control valve PV, the shut-off valve SV is switched to the communicatable position SVo. While the solenoid Sol can be normally energized, the shut-off valve SV is pressed by the drive force of the solenoid Sol so as to switch to the communicatable position SVo in which the pressure control passage PP is opened. Note that, when the solenoid Sol is not energized, or in a failure state in which energization of the solenoid Sol is impossible normally, no power is supplied to the solenoid Sol, and the shut-off valve SV is pressed by the spring EVs so as to close the pressure control passage PP.

Therefore, while the solenoid Sol of the electromagnetic valve EV can be normally energized, the pressure control can be performed using the pressure control valve PV by maintaining the shut-off valve SV in a communicatable position SVo by controlling the drive force of the solenoid Sol. In addition, in a failure state, the solenoid Sol is not energized. Therefore, the pressure control valve PV fully opens the pressure control passage PP, and the shut-off valve SV is switched to the shut-off position SVs to shut off the pressure control passage PP. In this manner, since the pressure control valve PV and the shut-off valve SV are integrated into the electromagnetic valve EV, it is not necessary to individually provide a solenoid and a spring in each of the pressure control valve PV and the shut-off valve SV, and commonalize the solenoid Sol and the spring EVs. Therefore, it is possible to reduce cost and weight and remarkably miniaturize the damping valve V1.

In addition, the pressure of the upstream of the shut-off valve SV and the downstream of the orifice O of the pressure control passage PP is guided to the main valve MV as a back pressure. While the shut-off valve SV opens the pressure control passage PP, the pressure of the upstream of the pressure control valve PV and the downstream of the orifice O of the pressure control passage PP is the back pressure guided to the main valve MV. Therefore, in a normal state, the back pressure applied to the main valve MV can be controlled by adjusting the drive force of the solenoid Sol.

The first failsafe passage FP1 branches from the upstream of the shut-off valve SV and the downstream of the orifice O of the pressure control passage PP and is connected to the pressure control passage PP at a point between the shut-off valve SV and the pressure control valve PV. The first failsafe passage FP1 is provided with a first failsafe valve FV1. The first failsafe valve FV1 receives a pressure of the downstream side of the orifice O of the pressure control passage PP applied in a valve open direction and a biasing force of the spring FV1s applied in a valve close direction. The first failsafe valve FV1 is a relief valve opened when the pressure of the upstream of the first failsafe valve FV1 reaches a predetermined valve-opening pressure set by the spring FV1s. Therefore, even when a failure state occurs, and the pressure control passage PP is shut off by the shut-off valve SV, the first failsafe valve FV1 serves as a relief valve. Therefore, the pressure of the upstream of the shut-off valve SV and the downstream of the orifice O of the pressure control passage PP is controlled to a pressure that depends on a flow-rate/pressure characteristic of the first failsafe valve FV1 and a flow rate passing therethrough. As a result, in a failure state, the back pressure guided to the main valve MV is controlled by the first failsafe valve FV1, so that the valve-opening pressure of the main valve MV is controlled to a predetermined pressure. Therefore, even in a failure state, the damping valve V1 can exert a damping force by applying a resistance to a flow of the working oil passing through the main valve MV.

In this manner, in the damping valve V1, the back pressure applied to the main valve MV is controlled by controlling the electromagnetic valve EV so as to adjust the damping force. In addition, even when the shut-off valve SV is disposed in the upstream of the pressure control valve PV of the pressure control passage PP, and the shut-off valve SV is closed, the first failsafe passage FP1 is effectively operated because the first failsafe passage FP1 branches from the upstream of the shut-off valve SV. Therefore, the failsafe function is not eliminated. Furthermore, using the damping valve V1 according to this embodiment, it is possible to prevent a problem that the damping force control becomes difficult when the state changes to a failure state in a normal state.

In the damping valve V1, the shut-off valve SV and the first failsafe valve FV1 are disposed in parallel. Therefore, when the shut-off valve SV opens the pressure control passage PP in a normal state, the working oil can pass through the shut-off valve SV with a small resistance.

Therefore, while the shut-off valve SV opens the pressure control passage PP, the back pressure of the main valve MV is adjusted by the pressure control valve PV regardless of whether the first failsafe valve FV is opened or closed. Therefore, it is possible to adjust the valve-opening pressure of the main valve MV and adjust the damping force of the shock absorber D1 regardless of the flow-rate/pressure characteristic of the first failsafe valve FV1. That is, the first failsafe valve FV1 does not affect the pressure control of the pressure control valve PV.

Although the shut-off valve SV shuts off the pressure control passage PP in a failure state, the first failsafe valve FV1 is opened when the pressure of the upstream side reaches the valve-opening pressure of the first failsafe valve FV1. Therefore, the working oil passes through the first failsafe valve FV1. In this manner, the first failsafe valve FV1 allows the working oil to flow by bypassing the shut-off valve SV. Therefore, the back pressure of the main valve MV becomes a pressure determined by the flow rate flowing through the first failsafe valve FV1.

In this manner, in the damping valve V1 according to this embodiment, it is possible to adjust the back pressure applied to the main valve MV using the pressure control valve PV in a normal state regardless of the valve-opening pressure of first failsafe valve FV1. In addition, in a failure state, the back pressure applied to the main valve MV can be controlled to a pressure that depends on a flow-rate/pressure characteristic and a passing flow rate of the first failsafe valve FV1.

Therefore, using the damping valve V1 according to this embodiment, it is possible to freely set a variable range of the pressure characteristic against the flow rate of the pressure control valve PV in a normal state. In addition, using the damping valve V1, the first failsafe valve FV1 does not affect a pressure control of the pressure control valve PV in a normal state. Therefore, it is possible to freely set the valve-opening pressure of the first failsafe valve FV1 regardless of the variable range of the pressure characteristic of the pressure control valve PV. That is, since the pressure characteristic against the flow rate passing through the first failsafe valve FV1 can be freely set, it is not necessary to set the valve-opening pressure of the first failsafe valve FV1 to be higher than an upper limit pressure adjusted by the control of the pressure control valve PV. Therefore, using the damping valve V1, it is possible to solve a problem that the back pressure applied to the main valve MV of a failure state becomes higher than a pressure of a normal state. Therefore, it is possible to freely set the damping force characteristic in a failure state.

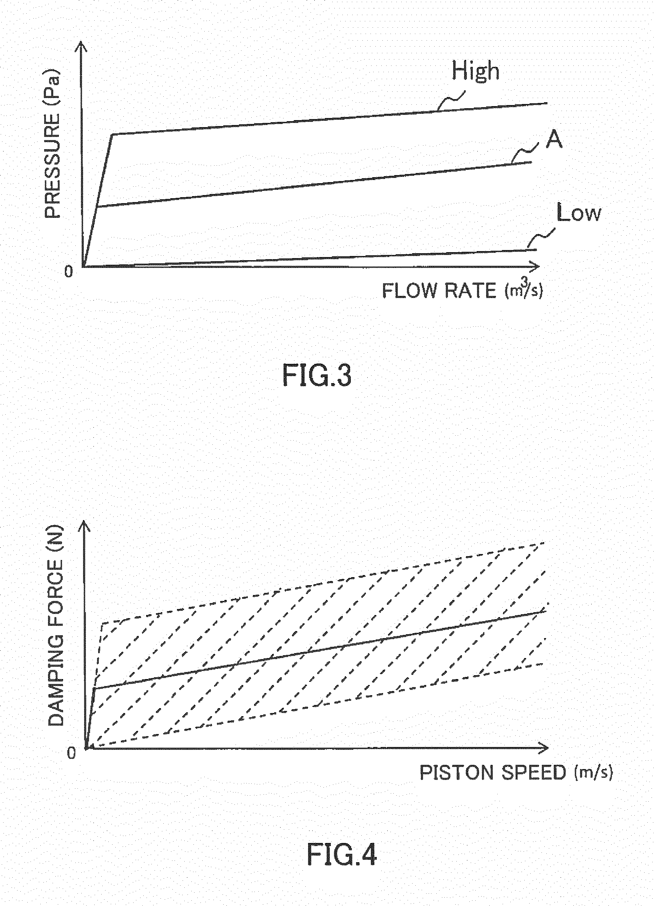

In the damping valve V1, it is possible to freely set the damping force characteristic in a failure state. Therefore, as illustrated in FIG. 3, for example, it is possible to set the flow-rate/pressure characteristic of the first failsafe valve FV1 (line A in FIG. 3) within a controllable range of the pressure control valve PV (between the lower limit Low and the upper limit High of the flow-rate/pressure characteristic of the pressure control valve PV in FIG. 3). Therefore, as illustrated in FIG. 4, even in a failure state, the shock absorber D1 can exert a damping force with an optimum damping force characteristic. Note that, in FIG. 4, the damping force range that can be output from the shock absorber D1 at a piston speed in a normal state is indicated by hatching with dotted lines, and a damping force that can be output at a piston speed in a failure state is indicated by a solid line. The damping force characteristic which is a characteristic of the damping force against a piston speed in a failure state can be changed arbitrarily depending on the setting of the flow-rate/pressure characteristic of the first failsafe valve FV1. In this manner, using the damping valve V1 according to this embodiment, it is possible to freely set the damping force characteristic in a failure state without changing from the normal state to the failure state. Note that, although the first failsafe valve FV1 is a relief valve in the aforementioned description, it may be an orifice such as a chalk or an orifice.

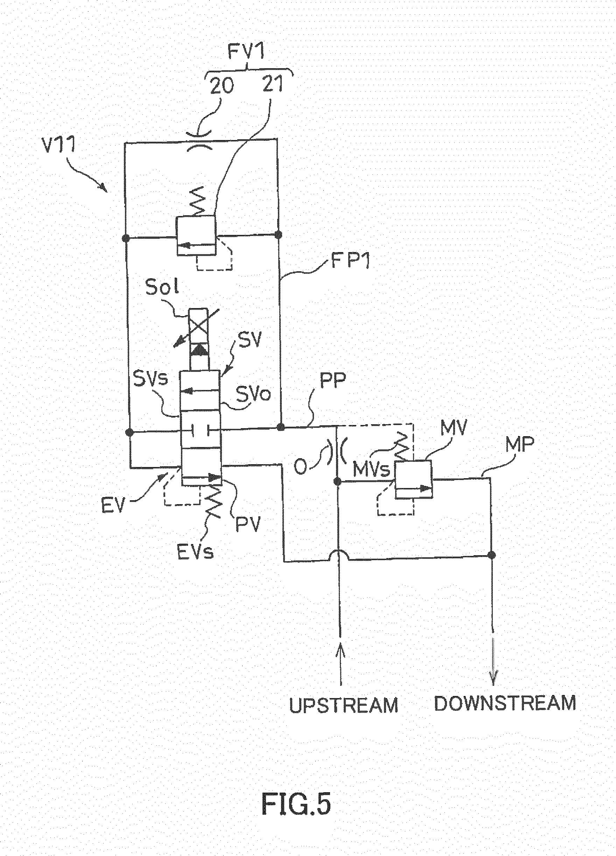

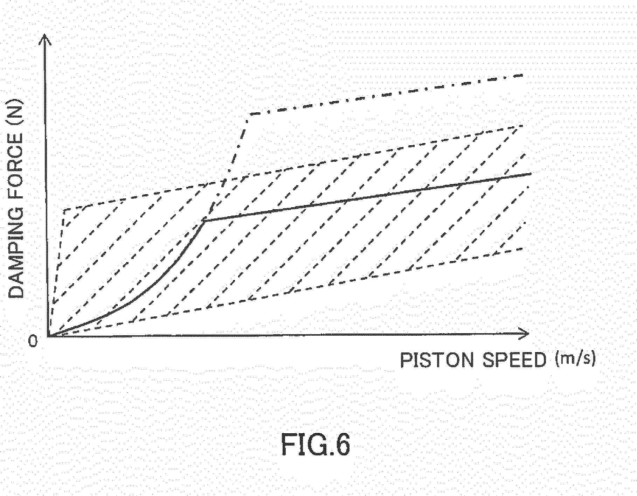

Similar to a damping valve V11 according to a modification of the first embodiment illustrated in FIG. 5, the first failsafe valve FV1 may be formed by arranging the orifice 20 and the relief valve 21 in parallel and may be provided in the first failsafe passage FP1. As a result, in a failure state, the working oil passes through the orifice 20 until the pressure of the upstream side of the shut-off valve SV of the pressure control passage PP reaches the valve-opening pressure of the relief valve 21. When the flow rate further increases, and the pressure of the upstream side of the shut-off valve SV of the pressure control passage PP reaches the valve-opening pressure of the relief valve 21, the relief valve 21 is opened, and the first failsafe passage FP1 is opened. Therefore, in the damping valve V11 according to this modification, when the piston speed is slow in a failure state, that is, when the flow rate flowing through the pressure control passage PP is low, the valve-opening pressure and the valve opening level of the main valve MV are controlled by the orifice 20. When the piston speed is fast, that is, when the flow rate flowing through the pressure control passage PP is high, the relief valve 21 is opened, so that the valve-opening pressure and the valve opening level of the main valve MV are controlled by the relief valve 21. Therefore, in the damping force characteristic of the damping valve V11 according to this modification, as illustrated in FIG. 6, the damping force increases as the piston speed increases when the piston speed is low. When the piston speed becomes fast, and the relief valve 21 is opened, an increase ratio of the damping force against an increase of the piston speed is reduced, compared to a case where the piston speed is low. In this manner, if the first failsafe valve FV1 is structured by arranging a plurality of valves in parallel, it is possible to arbitrarily set the damping force characteristic in a failure state. Furthermore, it is possible to individually set the damping force characteristic when the piston speed of the shock absorber D1 in a failure state is at a low speed range and the damping force characteristic when the piston speed is at a high speed range. Therefore, it is possible to improve a degree of freedom in setting of the damping force characteristic. Note that, similar to FIG. 4, in FIG. 6, a damping force range that can be output from the shock absorber D1 at a piston speed in a normal state is indicated by hatching with dotted lines, and a damping force that can be output at a piston speed in a failure state is indicated by a solid line.

When the pressure characteristic against the flow rate of the first failsafe valve FV1 is set within a pressure control range of the pressure control valve PV, it is possible to generate a damping force with a damping force characteristic close to a normal operation state of the shock absorber D1 in a failure state. Therefore, it is possible to prevent the damping force characteristic from abruptly changing when the state changes to a failsafe mode. In addition, by adjusting the pressure characteristic against the flow rate of the relief valve 21, it is possible to set the damping force characteristic within the pressure control range by the pressure control valve PV as indicated by the one dotted chain line in FIG. 6 when the piston speed of the shock absorber D1 is within a low speed range or to set the damping force characteristic over this pressure control range so as to exert a large damping force when the piston speed is within a high speed range.

In the damping valves V1 and V11, the back pressure applied to the main valve MV is adjusted by the pressure control valve PV. Therefore, it is possible to increase an amplification level of the valve-opening pressure of the main valve MV against the back pressure by increasing the pressurized area of the main valve MV for receiving the applied back pressure. Accordingly, it is possible to reduce a maximum output power of the solenoid Sol for controlling the electromagnetic valve EV. For this reason, it is possible to obtain a wide damping force adjustment range even by using a small solenoid Sol. Therefore, it is possible to miniaturize the damping valves V1 and V11. Therefore, it is possible to apply the damping valves V1 and V11 to a shock absorber D1 having a restricted mount space and thus improve mountability of the shock absorber on a vehicle.

Note that, although the first failsafe valve FV1 is formed by combining the orifice 20 and the relief valve 21 in the aforementioned modification, the first failsafe valve FV1 may be provided with a chalk and a relief valve. In addition, when the first failsafe valve FV1 is provided with the orifice 20 and the relief valve 21, it is possible to simplify the structure by substituting the relief valve 21 with a leaf valve and substituting the orifice 20 with a notch provided in the leaf value or a notch engraved in a valve seat where the leaf valve separates and sits.

### <Second Embodiment>

Next, a damping valve V2 according to the second embodiment will be described. In the description of the damping valve V2 according to the second embodiment, like reference numerals denote like elements as in the first embodiment, and they will not be described repeatedly.

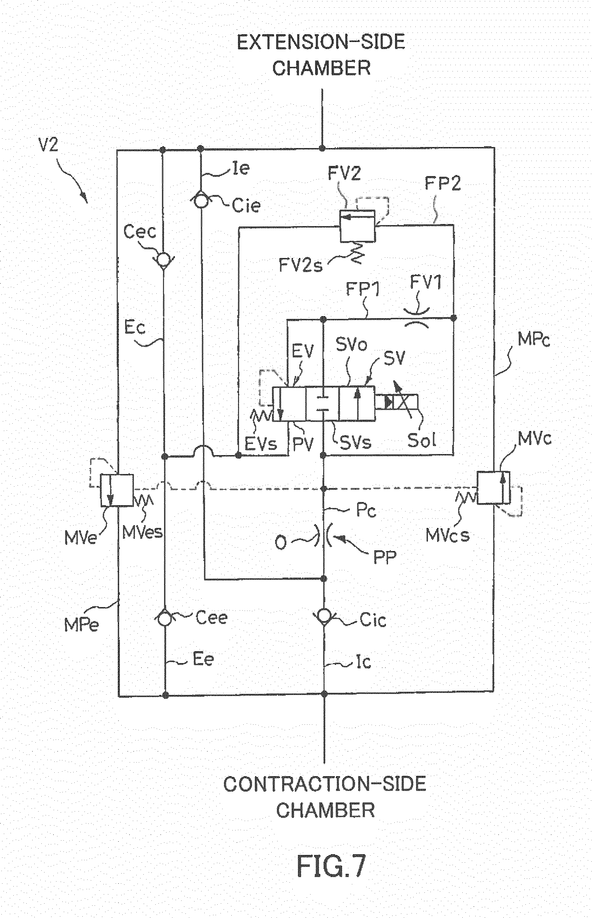

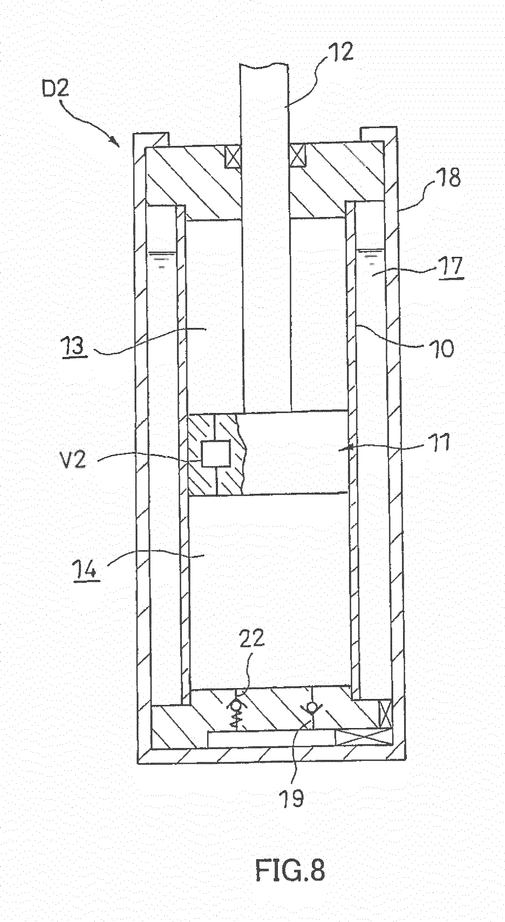

As illustrated in FIG. 7, the damping valve V2 according to the second embodiment includes a second failsafe passage FP2, a second failsafe valve FV2 provided in the failsafe passage FP2, in addition to the configuration of the damping valve V1 according to the first embodiment. Further, in the damping valve V2 according to the second embodiment, the main passage includes an extension-side main passage MPe and a contraction-side main passage MPc which allow the communication between an extension-side chamber 13 and a contraction-side chamber 14 provided in the shock absorber D2, which will be described later, and the main valve includes an extension-side main valve MVe provided in the extension-side main passage MPe and a contraction-side main valve MVc provided in the contraction-side main passage MPc. In addition, the damping valve V2 is provided in the piston 11 of the shock absorber D2 (refer to FIG. 8). During extension of the shock absorber D2, a resistance is applied to the flow of the working oil using the extension-side main valve MVe. During contraction of the shock absorber D2, a resistance is applied to the flow of the working oil using the contraction-side main valve MVc. As a result, a damping force is exerted in extension and contraction of the shock absorber D2.

First, the shock absorber D2 provided with the damping valve V2 will be described with reference to FIG. 8.

As illustrated in FIG. 8, the shock absorber D2 includes a cylinder 10, a piston 11 slidably inserted into the cylinder 10, a rod 12 movably inserted into the cylinder 10 and connected to the piston 11, extension-side and contraction-side chambers 13 and 14 partitioned by the piston 11 inserted into the cylinder 10, and an outer tube 18 that covers an outer circumference of the cylinder 10 to form a reservoir 17 with the cylinder 10. The extension-side chamber 13, the contraction-side chamber 14, and the reservoir 17 are filled with working oil. In addition, the reservoir 17 is also filled with a gas in addition to the working oil. Note that the hydraulic fluid may include any type of fluid that can exert a damping force other than the working oil.

The shock absorber D2 further includes an inlet passage 19 that allows only a flow of the working oil directed from the reservoir 17 to the contraction-side chamber 14 and a contraction-side damping passage 22 that allows only a flow of the working oil directed from the contraction-side chamber 14 to the reservoir 17.

When the shock absorber D2 makes a contracting operation, the piston 11 moves downward in FIG. 8, so that the contraction-side chamber 14 is compressed, and the working oil in the contraction-side chamber 14 moves to the extension-side chamber 13 through the contraction-side main valve MVc. In this contracting operation, the rod 12 intrudes into the cylinder 10, so that the working oil becomes excessive as much as a volume of the rod 12 intruding into the cylinder 10. This excessive amount of the working oil is extracted from the cylinder 10 and is discharged to the reservoir 17 through the contraction-side damping passage 22. In the contracting operation, the shock absorber D2 exerts the contraction-side damping force by generating a differential pressure between the contraction-side chamber 14 and the extension-side chamber 13 with the contraction-side main valve MVc and increasing the pressure of the contraction-side chamber 14 with the contraction-side damping passage 22.

In comparison, when the shock absorber D2 makes an extending operation, the piston 11 moves upward in FIG. 8, so that the extension-side chamber 13 is compressed, and the working oil in the extension-side chamber 13 moves to the contraction-side chamber 14 through the extension-side main valve MVe. In this extending operation, the rod 12 retreats from the cylinder 10, so that the working oil corresponding to the volume of the rod 12 retreating from the cylinder 10 is supplied from the reservoir 17 to the contraction-side chamber 14 through the inlet passage 19. In this extending operation, the shock absorber D2 exerts the extension-side damping force by generating a differential pressure between the extension-side chamber 13 and the contraction-side chamber 14 in the extension-side main valve MVe.

Note that, although the shock absorber D2 according to this embodiment includes the reservoir 17, the inlet passage 19, and the contraction-side damping passage 22, the reservoir 17, the inlet passage 19, and the contraction-side damping passage 22 may be removed from the shock absorber D2. Instead, a free-piston may be slidably inserted into the cylinder 10 to provide a gas chamber inside the cylinder 10. That is, the shock absorber D2 may be configured as a so-called mono-tube type shock absorber that compensates for a volume change inside the cylinder 10 by extending or contracting the gas chamber when the rod 12 moves into and out of the cylinder 10.

Next, the damping valve V2 will be described by focusing on portions different from the damping valve V1 with reference to FIG. 7.

The pressure control passage PP includes an expansion-side pressure introduction passage Ie and a contraction-side pressure discharge passage Ec connected to the extension-side chamber 13, a contraction-side pressure introduction passage Ic and an extension-side pressure discharge passage Ee connected to the contraction-side chamber 14, and an regulating passage Pc having one end connected to the extension-side pressure introduction passage Ie and the contraction-side pressure introduction passage Ic and the other end connected to the extension-side pressure discharge passage Ee and the contraction-side pressure discharge passage Ec.

The extension-side pressure introduction passage Ie is provided with a check valve Cie that allows only a flow of the working oil directed from the extension-side chamber 13 to the regulating passage Pc. The contraction-side pressure introduction passage Ic is provided with a check valve Cic that allows only a flow of the working oil directed from the contraction-side chamber 14 to the regulating passage Pc. In addition, the extension-side pressure discharge passage Ee is provided with a check valve Cee that allows only a flow of the working oil directed from the regulating passage Pc to the contraction-side chamber 14. The contraction-side pressure discharge passage Ec is provided with a check valve Cec that allows only a flow of the working oil directed from the regulating passage Pc to the extension-side chamber 13.

When the shock absorber D2 makes an extending operation, the extension-side chamber 13 is compressed, so that the working oil discharged from the extension-side chamber 13 flows to the regulating passage Pc through the extension-side pressure introduction passage Ie by opening the check valve Cie and moves to the contraction-side chamber 14 through the extension-side pressure discharge passage Ee by opening the check valve Cee. In comparison, when the shock absorber D2 makes a contracting operation, the contraction-side chamber 14 is compressed, so that the working oil discharged from the contraction-side chamber 14 flows to the regulating passage Pc through the contraction-side pressure introduction passage Ic by opening the check valve Cic and moves to the extension-side chamber 13 through the contraction-side pressure discharge passage Ec by opening the check valve Cec. In this manner, when the shock absorber D2 is extend or contracted, the working oil flows to the regulating passage Pc in a one-way direction at all times by setting the introduction passage Ie and Ic sides as the upstream and setting the discharge passage Ee and Ec sides as the downstream.

The regulating passage Pc is provided with an orifice O and an electromagnetic valve EV having a shut-off valve SV and a pressure control valve PV in this order from the upstream side. In addition, the first failsafe passage FP1 branches from the regulating passage Pc at a point between the orifice O and the shut-off valve SV and is connected to the regulating passage Pc at a point between the shut-off valve SV and the pressure control valve PV. That is, the first failsafe passage FP1 is configured to bypass the shut-off valve SV. The first failsafe passage FP1 is provided with the first failsafe valve FV1 constituted by an orifice.

The second failsafe passage FP2 branches from the regulating passage Pc at a point between the orifice O and the shut-off valve SV and communicates with the downstream of the electromagnetic valve EV. That is, the second failsafe passage FP2 is configured to bypass the electromagnetic valve EV. The second failsafe passage FP2 is provided with a second failsafe valve FV2 including a relief valve. The second failsafe valve FV2 receives a pressure of the downstream side of the orifice O of the pressure control passage PP applied in a valve open direction and a biasing force of the spring FV2s applied in a valve close direction. That is, the second failsafe valve FV2 is a relief valve opened when the pressure of the upstream of the second failsafe valve FV2 reaches a predetermined valve-opening pressure set by the spring FV2s.

In the damping valve V2, the pressure control valve PV and the second failsafe valve FV2 are arranged in parallel with the pressure control passage PP. If the valve-opening pressure of the second failsafe valve FV2 is lower than an upper limitation pressure that can be controlled by the pressure control valve PV, the second failsafe valve FV2 is opened even when the back pressures of the extension-side main valve MVe and the contraction-side main valve MVc are controlled to their upper limit pressures by the pressure control valve PV. For this reason, in such a setting, the upper limitation of the back pressure is restricted to the valve-opening pressure of the second failsafe valve FV2 even when the current applied to the solenoid Sol can be normally controlled. Therefore, the valve-opening pressure of the second failsafe valve FV2 is set to be higher than the upper limitation pressure that can be controlled by the pressure control valve PV.

As described above, the main passage includes the extension-side main passage MPe provided in the piston 11 to allow the extension-side chamber 13 and the contraction-side chamber 14 to communicate with each other and a contraction-side main passage MPc provided in the piston 11 to allow the extension-side chamber 13 and the contraction-side chamber 14 to communicate with each other.

The main valve includes an extension-side main valve MVe provided in the extension-side main passage MPe and a contraction-side main valve MVc provided in the contraction-side main passage MPc. The extension-side main valve MVe receives a pressure of the extension-side chamber 13 applied in a valve open direction, and the pressure of the extension-side chamber 13 is reduced by the orifice O and is applied as a back pressure in a valve close direction. In addition, the extension-side main valve MVe receives a biasing force of the spring MVes applied in a valve close direction. Therefore, the extension-side main valve MVe is opened when the force of opening the extension-side main valve MVe by virtue of the pressure of the extension-side chamber 13 is stronger than the force of closing the extension-side main valve MVe by virtue of the back pressure and the spring MVes, so that a resistance is applied to a flow of the working oil passing through the extension-side main passage MPe. The contraction-side main valve MVc receives a pressure of the contraction-side chamber 14 applied in a valve open direction, and the pressure of the contraction-side chamber 14 is reduced by the orifice O and is applied as a back pressure in a valve close direction. In addition, the contraction-side main valve MVc receives a biasing force of the spring MVcs in a valve close direction. Therefore, the contraction-side main valve MVc is opened when the force of opening the contraction-side main valve MVc by virtue of the pressure of the contraction-side chamber 14 is stronger than the force of closing the contraction-side main valve MVc by virtue of the back pressure and the spring MVcs, so that a resistance is applied to a flow of the working oil passing through the contraction-side passage MPc.

Therefore, in the damping valve V2, when the electromagnetic valve EV is normal during an extending operation of the shock absorber D2, the valve opening pressure of the extension side main valve MVe and the valve opening level in the valve open operation can be adjusted by controlling the back pressure applied to the extension-side main valve MVe using the pressure control valve PV. As a result, it is possible to control the damping force in the extending operation of the shock absorber D2. In addition, in the damping valve V2, if the electromagnetic valve EV is normal while the shock absorber D2 makes a contracting operation, it is possible to adjust the valve-opening pressure of the contraction-side main valve MVc and the valve opening level in the valve open operation by controlling the back pressure applied to the contraction-side main valve MVc using the pressure control valve PV. As a result, it is possible to control a damping force in the contracting operation of the shock absorber D2. In this normal state, the second failsafe valve FV2 is closed, and the first failsafe valve FV1 allows passing of the working oil. Since the shut-off valve SV arranged in parallel with the first failsafe valve FV1 is also opened in a normal state, the first and second failsafe valves FV1 and FV2 do not affect the pressure control of the pressure control valve PV in a normal state. In this manner, in the damping valve V2, the valve-opening pressures and the valve opening levels of the extension-side main valve MVe and the contraction-side main valve MVc can be adjusted using a single pressure control valve PV.

In comparison, in a failure state in which the electromagnetic valve EV is not normally operable, the regulating passage Pc is shut off by the shut-off valve SV. In this case, the first failsafe passage FP1 is configured to bypass the shut-off valve SV, and the second failsafe passage FP2 is configured to bypass the electromagnetic valve EV, so that the upstream and downstream of the pressure control passage PP communicate with each other. Therefore, the working oil can pass through the pressure control passage PP. When the shock absorber D2 has a slow piston speed and a low flow rate, the upstream pressure of the regulating passage Pc does not increase significantly. Therefore, the second failsafe valve FV2 is not opened. However, since the working oil passes through the first failsafe valve FV1, the back pressures of the extension-side main valve MVe and the contraction-side main valve MVc are adjusted to the pressure depending on the flow-rate/pressure characteristic of the first failsafe valve FV1, and the valve-opening pressures and the valve opening levels of the extension-side main valve MVe and the contraction-side main valve MVc are adjusted. Meanwhile, when the shock absorber D2 has a fast piston speed and a high flow rate, the upstream pressure of the regulating passage Pc increases by the first failsafe valve FV1. If the upstream pressure of the regulating passage Pc reaches the valve-opening pressure of the second failsafe valve FV2, the second failsafe valve FV2 is opened to enable a relief function. As a result, the pressure of the downstream of the orifice O of the regulating passage Pc and the upstream of the shut-off valve SV is adjusted to a pressure that depends on the flow-rate/pressure characteristic of the second failsafe valve FV2 and the passing flow rate. In this manner, the damping valve V2 can apply a resistance to a flow of the working oil passing through the extension-side main valve MVe and the contraction-side main valve MVc to exert a damping force even in a failure state.

In the damping valve V2 configured in this manner, similar to the damping valve V1 according to the first embodiment, the back pressure applied to the extension-side main valve MVe and the contraction-side main valve MVc can be controlled by controlling the electromagnetic valve EV to adjust the damping force.

Even when the shut-off valve SV is arranged in the upstream of the pressure control valve PV in the pressure control passage PP, and the shut-off valve SV is closed, the first and second failsafe passages FP1 and FP2 are effectively operated because the first failsafe passage FP1 is provided to bypass the shut-off valve SV, and the second failsafe passage FP2 is provided to bypass the electromagnetic valve EV. Therefore, the failsafe function is not eliminated. In addition, in the damping valve V2 according to this embodiment, it is possible to prevent a problem that the damping force control becomes difficult when the state changes to a failure state in a normal state.

In the damping valve V2, the shut-off valve SV and the first failsafe valve FV1 are arranged in parallel. For this reason, when the shut-off valve SV opens the pressure control passage PP in a normal state, the working oil can pass through the shut-off valve SV with a low resistance. In addition, the valve-opening pressure of the second failsafe valve FV2 is set to a value higher than an upper limitation of the controllable pressure of the pressure control valve PV. Therefore, when the shut-off valve SV opens the pressure control passage PP, the second failsafe valve FV2 is not opened, and the back pressures of the extension-side main valve MVe and the contraction-side main valve MVc are adjusted by the pressure control valve PV. As a result, it is possible to adjust the valve-opening pressures of the extension-side main valve MVe and the contraction-side main valve MVc and thus adjust the damping force of the shock absorber D2 regardless of the flow-rate/pressure characteristics of the first and second failsafe valves FV1 and FV2.

Meanwhile, during a failure state, the shut-off valve SV shuts off the pressure control passage PP, but the working oil bypassing the shut-off valve SV passes through the first failsafe valve FV1. As a result, the back pressures of the extension-side main valve MVe and the contraction-side main valve MVc become a pressure defined by the flow rate passing through the first failsafe valve FV1. In addition, when the second failsafe valve FV2 is opened, the back pressures of the extension-side main valve MVe and the contraction-side main valve MVc become a pressure defined by the flow-rate/pressure characteristics of the first and second failsafe valves FV1 and FV2.

In this manner, in the damping valve V2 according to this embodiment, during a normal state, it is possible to adjust the back pressures applied to the extension-side main valve MVe and the contraction-side main valve MVc using the pressure control valve PV regardless of the first and second failsafe valves FV1 and FV2. During a failure state, it is possible to adjust the back pressures applied to the extension-side main valve MVe and the contraction-side main valve MVc to a pressure that depends on the flow-rate/pressure characteristic(s) and the passing flow rate(s) of the first failsafe valve FV1 or the first and second failsafe valves FV1 and FV2.

Therefore, in the damping valve V2 according to this embodiment, the first and second failsafe valves FV1 and FV2 do not affect a pressure control of the pressure control valve PV during a normal state. Therefore, it is possible to freely set a variable range of the pressure characteristic against the flow rate of the pressure control valve PV during a normal state. In addition, it is possible to freely set the pressure characteristic against the flow rate passing through the first failsafe valve FV1. In addition, in the damping valve V2 according to this embodiment, it is possible to solve a problem that the back pressures applied to the extension-side main valve MVe and the contraction-side main valve MVc during a failure state become higher than the pressure of the normal state at all times. Therefore, it is possible to improve a degree of freedom in setting of the damping force characteristic during a failure state.

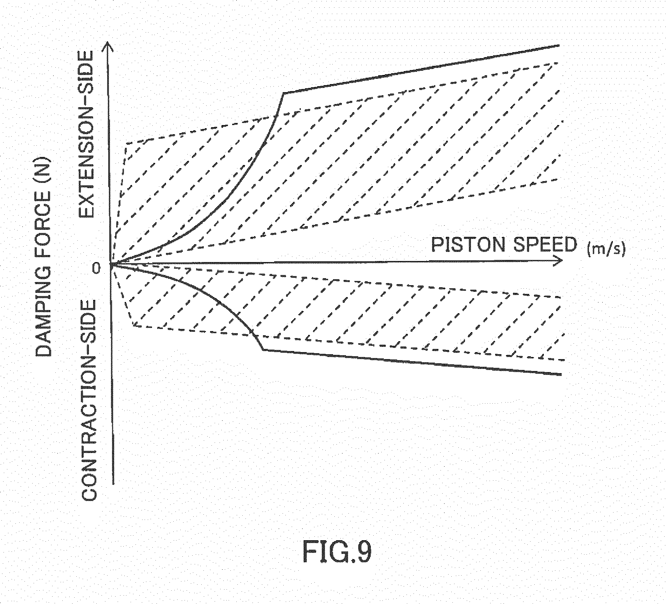

In the damping valve V2, when the piston speed of the shock absorber D2 is slow during a failure state, the valve-opening pressures of the extension-side main valve MVe and the contraction-side main valve MVc are controlled by the first failsafe valve FV1. When the flow rate flowing through the pressure control passage PP increases, and the piston speed is fast, the second failsafe valve FV2 is opened. Accordingly, the valve opening levels of the extension-side main valve MVe and the contraction-side main valve MVc of the main valve are controlled by the second failsafe valve FV2. Therefore, the damping force characteristic of the shock absorber D2 provided with the damping valve V2 is set such that, as illustrated in FIG. 9, the damping force increases as the piston speed increases under a slow piston speed, and an increase ratio of the damping force against an increase of the piston speed is reduced relative to a low piston speed state when the piston speed becomes fast, and the second failsafe valve FV2 is opened. In this manner, if the second failsafe valve FV2 is provided in addition to the first failsafe valve FV1, it is possible to individually set the damping force characteristic for a low piston speed range and the damping force characteristic for a high piston speed range of the shock absorber D2 during a failure state. Therefore, it is possible to improve a degree of freedom in setting of the damping force characteristic. Note that, similar to FIG. 4, in FIG. 9, the damping force range that can be output from the shock absorber D2 for the piston speed during a normal state is indicated by hatching with dotted lines, and the damping force that can be output for the piston speed during a failure state is indicated by solid lines.

In addition, since the damping valve V2 includes the extension-side main passage MPe, the contraction-side main passage MPc, the extension-side main valve MVe, and the contraction-side main valve MVc, and the back pressures applied to the extension-side main valve MVe and the contraction-side main valve MVc are adjusted by the pressure control valve PV, it is possible to control the valve-opening pressures of the extension-side main valve MVe and the contraction-side main valve MVc using a single pressure control valve PV. In addition, it is possible to increase an amplification level of the valve-opening pressures of the extension-side main valve MVe and the contraction-side main valve MVc against the back pressure by enlarging pressure-receiving areas for the back pressures on the extension-side main valve MVe and the contraction-side main valve MVc. Therefore, it is possible to reduce a maximum output of the solenoid Sol that controls the electromagnetic valve EV and obtain a wide damping force adjustment range even using a small solenoid Sol. As a result, it is possible to miniaturize the damping valve V2. Therefore, it is possible to apply the damping valve V2 to a shock absorber D2 having a restraint in the mount space and improve mountability of the shock absorber on a vehicle. In addition, if the pressure-receiving area for the back pressure on the extension-side main valve MVe is set to be larger than that of the contraction-side main valve MVc, it is possible to easily exert a damping force necessary in a shock absorber of a vehicle in which the extension-side damping force is set to be higher than the contraction-side damping force.

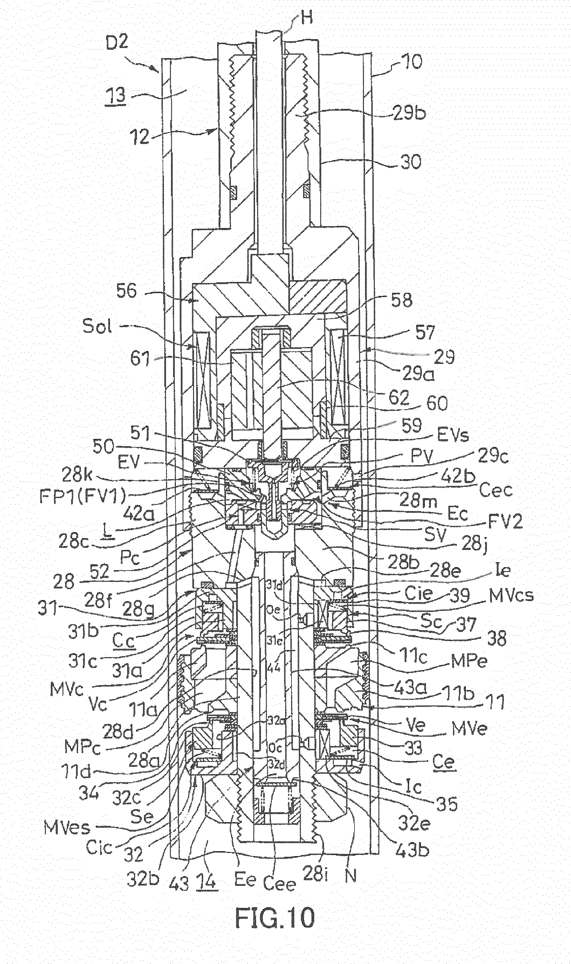

Next, a structure of the damping valve V2 applied to the shock absorber D2 will be described in details. FIG. 10 is a cross-sectional view illustrating a structure of the damping valve V2 applied in the shock absorber D2.

The shock absorber D2 includes a cylinder 10 filled with a liquid such as the working oil, a piston 11 movably inserted into the cylinder 10, an extension-side chamber 13 and a contraction-side chamber 14 partitioned by the piston 11 inserted into the cylinder 10, a rod 12 movably inserted into the cylinder 10 and connected to the piston 11, and a damping valve V2. Although not shown in the drawing, a free piston is slidably inserted into a lower part of the cylinder 10 in FIG. 10, so that a gas chamber filled with a gas is provided under the contraction-side chamber 14 in FIG. 10 inside the cylinder 10 due to this free piston. Therefore, if the shock absorber D2 makes an extending or contracting operation, the rod 12 moves into and out of the cylinder 10, and a total volume of the extension-side chamber 13 and the contraction-side chamber 14 changes, the free piston vertically reciprocates inside the cylinder 10 to extend or contract the gas chamber, and a volume of the rod 12 moving into and out of the cylinder 10 is compensated. That is, the shock absorber D2 is operated as a mono-tube type shock absorber.

The damping valve V2 includes an extension-side main passage MPe and a contraction-side main passage MPc as a main passage provided in the piston 11, an extension-side main valve MVe stacked on the piston 11 and provided with a leaf valve Ve for opening or closing an outlet end of the extension-side main passage MPe, a contraction-side main valve MVc stacked on the piston 11 and provided with a leaf valve Vc for opening or closing an outlet end of the contraction-side main passage MPc, a pressure control passage PP (a contraction-side pressure discharge passage Ec, an extension-side pressure discharge passage Ee, and an regulating passage Pc) for controlling the back pressures of the extension-side main valve MVe and the contraction-side main valve MVc, an orifice, an electromagnetic valve EV having a shut-off valve SV and a pressure control valve PV, a first failsafe passage FP1, an orifice as a first failsafe valve FV1 provided in the first failsafe passage FP1, a second failsafe passage FP2, and a second failsafe valve FV2 provided in the second failsafe passage FP2 to serve as a relief valve.

In the damping valve V2, when the piston 11 moves along an axial direction which is a vertical direction in FIG. 10 relative to the cylinder 10, the extension-side main valve MVe applies a resistance to a flow of the working oil passing through the extension-side main passage MPe provided in the piston 11, and the contraction-side main valve MVc applies a resistance to a flow of the working oil passing through the contraction-side main passage MPc provided in the piston 11, so that a damping force is exerted. Note that, when only the extension-side main passage MPe of the shock absorber D2 is used as a main passage, and only the extension-side main valve MVe is used as a main valve, or when only the contraction-side main passage MPc is used as main passage, and only the contraction-side main valve MVc is used as a main valve, the damping valve V1 may be applied to the shock absorber D2.

The rod 12 includes a piston holding member 28 that holds the piston 11, an electromagnetic valve housing tube 29 having one end connected to the piston holding member 28 to house the electromagnetic valve EV together with the piston holding member 28, and a rod member 30 having one end connected to the electromagnetic valve housing tube 29 and the other end protruding outward from the upper end of the cylinder 10. A housing portion L is formed between the piston holding member 28 and the electromagnetic valve housing tube 29, and the electromagnetic valve EV is housed in the housing portion L.

The piston holding member 28 has a holding shaft 28a provided with an outer circumference where an annular piston 11 is mounted, a flange 28b provided on an outer circumference of the upper end of the holding shaft 28a in FIG. 10, and a tubular socket 28c provided on an outer circumference of the upper end of the flange 28b in FIG. 10. In addition, the piston holding member 28 includes a vertical hole 28d opened from a tip of the holding shaft 28a and connected to a socket 28c extending in an axial direction, an annular groove 28e provided to surround the holding shaft 28a in the lower end of the flange 28b of FIG. 10, a port 28f that allows the annular groove 28e to communicate with the socket 28c, a horizontal hole 28g that allows the annular groove 28e to communicate with the vertical hole 28d, an extension-side pilot orifice Oe and a contraction-side pilot orifice Oc that communicate with the vertical hole 28d from an outer circumference of the holding shaft 28a to apply a resistance to a flow of the working oil passing therethrough, a thread portion 28i provided in an outer circumference of the lower end of the holding shaft 28a in FIG. 10, and a groove 28j formed on the upper end surface of the flange 28b to communicate with the vertical hole 28d. According to this embodiment, the orifice includes the extension-side pilot orifice Oe and the contraction-side pilot orifice Oc.

A tubular separator 43 provided with an annular groove 43a in its outer circumference is inserted into the vertical hole 28d provided in the holding shaft 28a. The vertical hole 28d and the annular groove 43a partition the communication passage 44 that allows the extension-side pilot orifice Oe and the contraction-side pilot orifice Oc to communicate with each other. An annular valve seat 43b that surrounds the opening of the lower end of the separator 43 is provided in the lower end of the separator 43 in FIG. 10. The vertical hole 28d allows the contraction-side chamber 14 to communicate with the socket 28c through the separator 43. The extension-side pilot orifice Oe and the contraction-side pilot orifice Oc are configured not to communicate with the contraction-side chamber 14 and the socket 28c by the separator 43 in the vertical hole 28d. In addition, the horizontal hole 28g communicates with the communication passage 44 and does not communicate with the contraction-side chamber 14 and the socket 28c by the separator 43 in the vertical hole 28d.

Note that the extension-side pilot orifice Oe and the contraction-side pilot orifice Oc may be another type of orifice such as a chalk passage instead of the orifice as long as a resistance is applied to the flow of the passing working oil.

An annular recess 28k is provided on the outer circumference of the upper end of the socket 28c in FIG. 10. In addition, the socket 28c is provided with a through-hole 28m connected to the socket 28c from the recess 28k. An annular plate 42a is mounted on the recess 28k. The annular plate 42a is biased by the spring member 42b from the upper side in FIG. 10 and serves as a check valve Cec for opening or closing the through-hole 28m.

The electromagnetic valve housing tube 29 includes a topped cylindrical housing tube portion 29a, a tubular connecting portion 29b having an outer diameter smaller than that of the housing tube portion 29a and extending upward in FIG. 10 from the top portion of the housing tube portion 29a, and an access port 29c opened from the lateral side of the housing tube portion 29a and connected to the inside. When the socket 28c of the piston holding member 28 is screwed to the inner circumference of the housing tube portion 29a, the piston holding member 28 is integrated into the electromagnetic valve housing tube 29, and a housing portion L where the electromagnetic valve EV is housed is formed in the housing tube portion 29a by the electromagnetic valve housing tube 29 and the piston holding member 28. In the housing portion L, a part of the regulating passage Pc described below in detail is formed. The housing portion L communicates with the communication passage 44 through the port 28f, the annular groove 28e, and the horizontal hole 28g. According to this embodiment, the regulating passage Pc is formed by the port 28f, the annular groove 28e, the horizontal hole 28g, the communication passage 44, the extension-side pilot orifice Oe, and the contraction-side pilot orifice Oc. Note that a passage that allows the housing portion L and the communication passage 44 to directly communicate with each other may be provided instead of the port 28f, the annular groove 28e, and the horizontal hole 28g as long as the housing portion L communicates with the communication passage 44. However, if the port 28f, the annular groove 28e, and the horizontal hole 28g are employed, the passage that allows the housing portion L and the communication passage 44 to communicate with each other can be easily fabricated advantageously.

As described above, if the electromagnetic valve housing tube 29 and the piston holding member 28 are integrated, the access port 29c forms a contraction-side pressure discharge passage Ec that allows the housing portion L to communicate with the extension-side chamber 13 in cooperation with the recess 28k and the through-hole 28m. In addition, a check valve Cec that allows only a flow of the working oil directed to the extension-side chamber 13 from the housing portion L is formed by the annular plate 42a and the spring member 42b. That is, the contraction-side pressure discharge passage Ec is formed by the access port 29c, the recess 28k, and the through-hole 28m, and the check valve Cec is provided in the contraction-side pressure discharge passage Ec.

A check valve Cee that separates from or sits on the annular valve seat 43b provided in the lower end of the separator 43 in FIG. 10 is provided in the vertical hole 28d of the piston holding member 28. The check valve Cee blocks a flow of the working oil directed from the contraction-side chamber 14 side to the housing portion L and allows only a flow of the working oil directed from the housing portion L to the contraction-side chamber 14. The extension-side pressure discharge passage Ee is formed inside the vertical hole 28d by the separator 43.

The rod member 30 is formed in a tubular shape. An inner circumference of the lower end of the rod member 30 in FIG. 10 is widened to allow insertion of a connecting portion 29b of the electromagnetic valve housing tube 29. In addition, the rod member 30 has a thread portion (not shown) to which the connecting portion 29b is screwed. The rod member 30, the electromagnetic valve housing tube 29, and the piston holding member 28 are integrated to form the rod 12.

Note that a harness H for supplying power to the solenoid Sol as described below is inserted into the rod member 30 and the connecting portion 29b of the electromagnetic valve housing tube 29. Although not shown in the drawing, the upper end of the harness H is connected to a power source by extending outward from the upper end of the rod member 30.

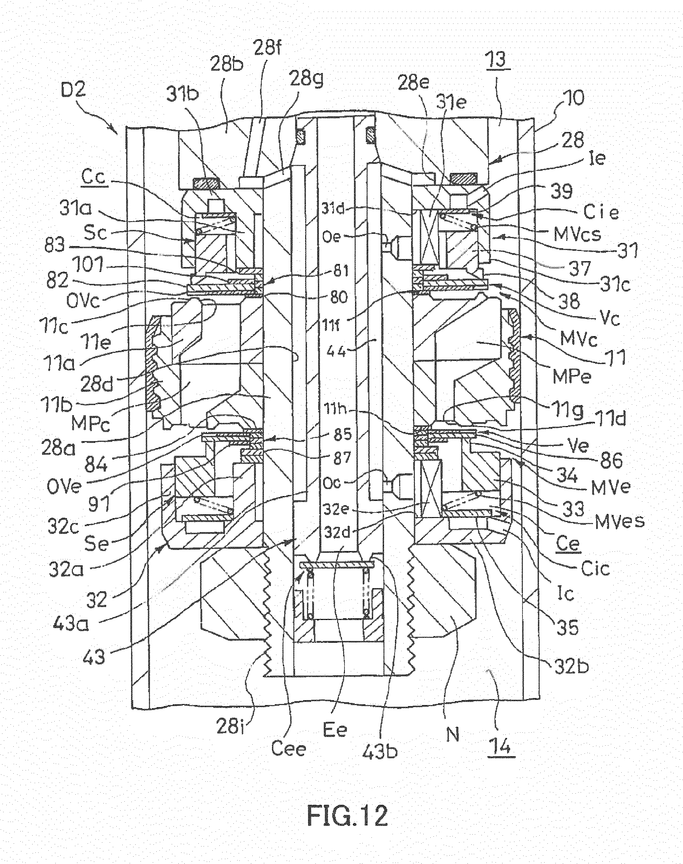

As illustrated in FIG. 12, the extension-side main valve MVe and the contraction-side main valve MVc are assembled to the outer circumference of the holding shaft 28a of the piston holding member 28 along with the annular piston 11. They are fixed to the holding shaft 28a with a nut N. The extension-side main valve MVe includes an extension-side leaf valve Ve, an extension-side spool Se that biases the extension-side leaf valve Ve, and an extension-side back-pressure chamber Ce that presses the extension-side spool Se with an internal pressure. The contraction-side main valve MVc includes a contraction-side leaf valve Vc, a contraction-side spool Sc that biases the contraction-side leaf valve Vc, and a contraction-side back-pressure chamber Cc that presses the contraction-side spool Sc with an internal pressure.

To the upper side of the piston 11 in FIG. 12, a contraction-side annular spacer 80, a collar 81 formed by stacking a plurality of annular plates having a circular exterior shape, an annular contraction-side leaf valve Vc slidably mounted to the outer circumference of the collar 81, a contraction-side annular plate 82 slidably mounted to the outer circumference of the collar 81, a contraction-side stopper 83, a contraction-side spool Sc, and a contraction-side chamber 31 that forms the contraction-side back-pressure chamber Cc are assembled. To the lower side of the piston 11 in FIG. 12, an extension-side annular spacer 84, a collar 85 formed by stacking a plurality of annular plates having a circular exterior shape, an annular extension-side leaf valve Ve slidably mounted to the outer circumference of the collar 85, an extension-side annular plate 86 slidably mounted to the outer circumference of the collar 85, an extension-side stopper 87, an extension-side spool Se, and an extension-side chamber 32 that forms the extension-side back-pressure chamber Ce are assembled.

The piston 11 is formed by overlapping upper and lower disks 11a and 11b vertically divided. The piston 11 is provided with the extension-side main passage MPe and the contraction-side main passage MPc that allows the extension-side chamber 13 to communicate with the contraction-side chamber 14. If the piston 11 is formed by the upper and lower disks 11a and 11b vertically divided, the extension-side main passage MPe and the contraction-side main passage MPc having a complicated shape can be formed without performing a drilling work. Therefore, it is possible to easily manufacture the piston 11 at low cost. In the upper end of the upper disk 11a of FIG. 12, an annular window 11e communicating with the contraction-side main passage MPc, an annular contraction-side valve seat 11c formed in the outer circumferential side of the annular window 11e to surround the contraction-side main passage MPc, and an inner circumferential seat portion 11f formed in the inner circumference of the annular window 11e are provided. In addition, in the lower end of the lower disk 11b, an annular window 11g communicating with the extension-side main passage MPe, an annular extension-side valve seat 11d formed in the outer circumferential side of the annular window 11g to surround the extension-side main passage MPe, and an inner circumferential seat portion 11h formed in the inner circumference of the annular window 11g.

According to this embodiment, as illustrated in FIG. 10, the damping valve V2 includes an extension-side main valve MVe, a contraction-side main valve MVc, a communication passage 44 that allows the contraction-side back-pressure chamber Cc and the extension-side back-pressure chamber Ce to communicate with each other through the extension-side pilot orifice Oe and the contraction-side pilot orifice Oc, an extension-side pressure introduction passage Ie that allows only a flow of the working oil directed from the extension-side chamber 13 to the contraction-side back-pressure chamber Cc, a contraction-side pressure introduction passage Ic that allows only a flow of the working oil directed from the contraction-side chamber 14 to the extension-side back-pressure chamber Ce, an regulating passage Pc including the communication passage 44, a contraction-side pressure discharge passage Ec that allows the downstream of the regulating passage Pc to communicate with the extension-side chamber 13 and allows only a flow of the working oil directed from the regulating passage Pc to the extension-side chamber 13, an extension-side pressure discharge passage Ee that allows the downstream of the regulating passage Pc to communicate with the contraction-side chamber 14 and allows only a flow of the working oil directed from the regulating passage Pc to the contraction-side chamber 14, and an electromagnetic valve EV provided in the regulating passage Pc to control the upstream pressure of the regulating passage Pc.

As illustrated in FIG. 12, the extension-side leaf valve Ve is formed in an annular shape to allow insertion of the holding shaft 28a of the piston holding member 28. According to this embodiment, the extension-side leaf valve Ve is formed from a single annular plate. Instead, the extension-side leaf valve Ve may be formed by stacking a plurality of annular plates. The extension-side leaf valve Ve configured in this manner is stacked on the lower side of the piston 11 in FIG. 12 by interposing the extension-side annular spacer 84 stacked on the inner circumferential seat portion 11h of the piston 11. In addition, the extension-side leaf valve Ve has a notch OVe serving as an orifice when the extension-side leaf valve Ve sits on the extension-side valve seat 11d in its outer circumference and is slidably mounted to the outer circumference of the collar 85. The extension-side annular plate 86 stacked on the extension-side leaf valve Ve is slidably mounted to the outer circumference of the collar 85. Note that, according to this embodiment, an annular subsidiary valve 91 having an outer diameter smaller than that of the extension-side annular plate 86 is stacked on the side of the extension-side annular plate 86 opposite to the leaf valve. The subsidiary valve 91 is also slidably mounted to the outer circumference of the collar 85. An axial length obtained by stacking the extension-side leaf valve Ve, the extension-side annular plate 86, and the subsidiary valve 91 is set to be shorter than the axial length of the collar 85. In addition, an annular extension-side stopper 87 having an outer diameter larger than the inner diameters of the subsidiary valve 91 and the extension-side annular plate 86 is provided in the lower side of the collar 85 in FIG. 12. The extension-side chamber 32 is stacked on the lower side of the extension-side stopper 87. The extension-side leaf valve Ve, the extension-side annular plate 86, and the subsidiary valve 91 are configured to move vertically in FIG. 12 which is an axial direction between the extension-side annular spacer 84 and the extension-side stopper 87 while being guided by the collar 85.

As the extension-side leaf valve Ve is pressed by a pressure from the extension-side main passage MPe, its outer circumference is bent along with the extension-side annular plate 86, and the whole extension-side leaf valve Ve recedes from the piston 11 along with the extension-side annular plate 86 and the subsidiary valve 91. The recession lengths of the leaf valve Ve, the extension-side annular plate 86, and the subsidiary valve 91 from the piston 11 are set depending on an axial length of the collar 85. Since the collar 85 includes a plurality of annular plates, the axial length of the collar 85 can be adjusted by changing the number of the stacked annular plates. Note that the collar 85 may include only a single annular plate.

As described above, the extension-side leaf valve Ve is stacked on the lower side of the piston 11 in FIG. 12 by interposing the extension-side annular spacer 84 stacked on the inner circumferential seat portion 11h of the piston 11. While no load is applied to the extension-side leaf valve Ve, a gap is formed between the leaf valve Ve and the extension-side valve seat 11d. A vertical length of this gap in FIG. 12 can be adjusted by replacing the extension-side annular spacer 84 with another one having a different thickness or changing the number of the stacked extension-side annular spacers 84. Note that the gap between the extension-side leaf valve Ve and the extension-side valve seat 11d may also be formed by directly stacking the extension-side leaf valve Ve on the inner circumferential seat portion 11h while setting the height of the inner circumferential seat portion 11h to be higher than the height of the extension-side valve seat 11d without providing the extension-side annular spacer 84. However, if the extension-side annular spacer 84 is employed, the length of the gap can be easily adjusted.

The extension-side leaf valve Ve is bent when a biasing force caused by the pressure of the extension-side back pressure chamber Ce is applied from the side opposite to the piston corresponding to the back side. However, as the biasing force increases, the extension-side leaf valve Ve sits on the extension-side valve seat 11d and blocks the extension-side main passage MPe. In this state, the extension-side main passage MPe is allowed to communicate with the contraction-side chamber 14 only through the notch OVe.

The extension-side annular plate 86 is formed to have a flexural rigidity higher than that of the extension-side leaf valve Ve. Specifically, the extension-side annular plate 86 is formed to have an axial length (thickness) longer than that of the extension-side leaf valve Ve. Note that the extension-side annular plate 86 may be formed of a material having rigidity higher than that of the extension-side leaf valve Ve without limiting to the configuration in which the rigidity is strengthened by the axial length.

The inner diameter of the extension-side annular plate 86 is set to be smaller than the outer diameter of the inner circumferential seat portion 11h of the piston 11. The outer diameter of the extension-side annular plate 86 is set to be larger than the inner diameter of the extension-side valve seat 11d. When the extension-side annular plate 86 is pressed from the back side by the pressure of the extension-side back-pressure chamber Ce and the extension-side spool Se, the extension-side annular plate 86 pushes up and bends the extension-side leaf valve Ve. In addition, when the extension-side leaf valve Ve is bent until it sits on the extension-side valve seat 11d, the extension-side annular plate 86 is supported by the inner circumferential seat portion 11h and the extension-side valve seat 11d because the inner and outer diameters of the extension-side annular plate 86 are set as described above. That is, the extension-side annular plate 86 receives the pressure of the extension-side back-pressure chamber Ce and the biasing force from the extension-side spool Se. Therefore, further deformation of the extension-side leaf valve Ve is suppressed, so that it is possible to prevent an overload on the extension-side leaf valve Ve. In addition, the subsidiary valve 91 has an outer diameter smaller than those of the extension-side leaf valve Ve and the extension-side annular plate 86. For this reason, when the extension-side leaf valve Ve and the extension-side annular plate 86 are bent by the pressure of the extension-side main passage MPe, the outer circumferential side from the subsidiary valve 91 is more easily bent. In this manner, it is possible to tune the damping force characteristic of the extension-side damping force using the subsidiary valve 91. Note that a plurality of subsidiary valves 91 may also be stacked. Furthermore, the subsidiary valve 91 may not be provided if the subsidiary valve 91 is not necessary due to the damping force characteristic generated in the shock absorber D2.

The extension-side chamber 32 includes a tubular mount portion 32a fitted to the outer circumference of the holding shaft 28a of the piston holding member 28, a flange portion 32b provided in the outer circumference of the lower end of the mount portion 32a in FIG. 12, a sliding-contact tube 32c extending from the outer circumference of the flange portion 32b to the piston 11 side, an annular groove 32d provided in the inner circumference of the mount portion 32a, and a notch 32e connected to the annular groove 32d from the outer circumference of the mount portion 32a. When the extension-side chamber 32 is assembled to the holding shaft 28a, the annular groove 32d faces the contraction-side pilot orifice Oc provided in the holding shaft 28a. Note that, although the extension-side stopper 87 is interposed between the collar 85 and the mount portion 32a of the extension-side chamber 32, the extension-side stopper 87 may be removed, and the mount portion 32a may serve as a stopper for restricting a lower limitation for the movement of the extension-side annular plate 86. However, it is necessary to adjust the contraction-side pilot orifice Oc and the annular groove 32d to a position where they face each other when the extension-side chamber 32 is assembled to the holding shaft 28a of the piston holding member 28, a position of the extension-side chamber 32 with respect to the piston holding member 28 can be adjusted by providing the extension-side stopper 87.

The extension-side spool Se is housed in the sliding-contact tube 32c. An outer circumference of the extension-side spool Se makes sliding contact with an inner circumference of the sliding-contact tube 32c, so that the extension-side spool Se can move in an axial direction inside the sliding-contact tube 32c. The extension-side spool Se has an annular spool body 33 and an annular protrusion 34 erected from the inner circumference of the upper end of the spool body 33 in FIG. 12. The inner diameter of the annular protrusion 34 is set to be smaller than the outer diameter of the extension-side annular plate 86. As a result, the annular protrusion 34 can abut on the lower surface of FIG. 12 which is the back side of the extension-side annular plate 86.

When the extension-side spool Se is assembled to the extension-side chamber 32, and the extension-side chamber 32 is assembled to the holding shaft 28a in this state, the extension-side back-pressure chamber Ce is formed in the lower side of FIG. 12 which is the back side of the extension-side leaf valve Ve. Note that, although the spool body 33 has an inner diameter larger than the outer diameter of the mount portion 32a, the inner diameter of the spool body 33 may be set as a diameter making sliding contact with the outer circumference of the mount portion 32a to seal the extension-side back-pressure chamber Ce with the extension-side spool Se.

The inner circumference of the mount portion 32a of the extension-side chamber 32 is provided with the annular groove 32d and the notch 32e connected to the annular groove 32d from the outer circumference of the mount portion 32a. When the extension-side chamber 32 is assembled to the holding shaft 28a, the annular groove 32d faces the contraction-side pilot orifice Oc provided in the holding shaft 28a, so that the extension-side back-pressure chamber Ce communicates with the contraction-side pilot orifice Oc.

The extension-side chamber 32 is provided with the contraction-side pressure introduction passage Ic opened from the outer circumference of the flange portion 32b. The contraction-side pressure introduction passage Ic allows the contraction-side chamber 14 and the extension-side back-pressure chamber Ce to communicate with each other. The annular plate 35 is stacked on the upper end of the flange portion 32b of the extension-side chamber 32 in FIG. 12. The annular plate 35 is pressed to the flange portion 32b by virtue of the spring MVes interposed between the annular plate 35 and the spool body 33 of the extension-side spool Se to block the contraction-side pressure introduction passage Ic. Note that the contraction-side pressure introduction passage Ic is configured not to generate a resistance to a flow of the working oil passing therethrough.

When the contraction-side chamber 14 is compressed, and the pressure increases during a contracting operation of the shock absorber D2, the annular plate 35 is pressed by this pressure and separates from the flange portion 32b, so that the contraction-side pressure introduction passage Ic is opened. In comparison, during an extending operation of the shock absorber D2 in which the pressure of the extension-side back-pressure chamber Ce becomes higher than that of the contraction-side chamber 14, the annular plate 35 is pressed by the flange portion 32b, so that the contraction-side pressure introduction passage Ic is blocked. That is, the annular plate 35 serves as a valve body of the check valve Cic that allows only a flow of the working oil from the contraction-side chamber 14. The contraction-side pressure introduction passage Ic is set as a one-way passage that allows only a flow of the working oil directed from the contraction-side chamber 14 to the extension-side back-pressure chamber Ce by the check valve Cic.

The spring MVes plays a role of pressing the annular plate 35 against the flange portion 32b and forms the check valve Cic along with the annular plate 35. In addition, the spring MVes also plays a role of biasing the extension-side spool Se toward the extension-side leaf valve Ve. Since the extension-side spool Se is biased by the spring MVes, the extension-side leaf valve Ve is bent. Therefore, when the bending of the extension-side leaf valve Ve is released from the state in which the extension-side spool Se separates from the piston 11 (in the downward pressed state in FIG. 12), the extension-side spool Se can rapidly return to its original position (the position of FIG. 12) by following the extension-side leaf valve Ve. The extension-side spool Se may be biased using a separate spring member. However, if the spring MVes is shared with the check valve Cic, it is possible to reduce the number of components and simplify the structure advantageously. Note that the outer diameter of the extension-side spool Se is set to be larger than the inner diameter of the annular protrusion 34, and the annular protrusion 34 abuts on the extension-side annular plate 86. As a result, the extension-side spool Se is biased toward the extension-side leaf valve Ve at all times by virtue of the pressure of the extension-side back-pressure chamber Ce.

As illustrated in FIG. 12, similar to the extension-side leaf valve Ve, the contraction-side leaf valve Vc stacked on the upper side of the piston 11 is formed in an annular shape in order to allow insertion of the holding shaft 28a of the piston holding member 28. Although the contraction-side leaf valve Vc includes a single annular plate in this embodiment, it may be formed by stacking a plurality of annular plates. The contraction-side leaf valve Vc formed in this manner is stacked on the upper side of the piston 11 in FIG. 12 by interposing the contraction-side annular spacer 80 stacked on the inner circumferential seat portion 11f of the piston 11. In addition, the contraction-side leaf valve Vc has a notch OVc serving as an orifice when its outer circumference sits on the contraction-side valve seat 11c. In addition, the contraction-side leaf valve Vc is slidably mounted on the outer circumference of the collar 81. The contraction-side annular plate 82 stacked on the contraction-side leaf valve Vc is slidably mounted on the outer circumference of the collar 81. Note that, according to this embodiment, an annular subsidiary valve 101 having an outer diameter smaller than that of the contraction-side annular plate 82 is stacked on the side of the contraction-side annular plate 82 opposite to the contraction-side leaf valve. Similarly, the subsidiary valve 101 is also slidably mounted on the outer circumference of the collar 81. The axial length obtained by stacking the contraction-side leaf valve Vc, the contraction-side annular plate 82, and the subsidiary valve 101 is set to be shorter than the axial length of the collar 81. In addition, an annular contraction-side stopper 83 having an outer diameter larger than the inner diameters of the subsidiary valve 101 and the contraction-side annular plate 82 is provided over the collar 81 in FIG. 12. The contraction-side chamber 31 is stacked over the contraction-side stopper 83. Therefore, the contraction-side leaf valve Vc, the contraction-side annular plate 82, and the subsidiary valve 101 can be guided by the collar 81 to move vertically in FIG. 12 in an axial direction between the contraction-side annular spacer 80 and the contraction-side stopper 83.

When the contraction-side leaf valve Vc is pressed by the pressure from the contraction-side main passage MPc, its outer circumference is bent along with the contraction-side annular plate 82, and the whole contraction-side leaf valve Vc recedes from the piston 11 along with the contraction-side annular plate 82 and the subsidiary valve 101. The recession lengths of the contraction-side leaf valve Vc, the contraction-side annular plate 82, and the subsidiary valve 101 from the piston 11 are set depending on the axial length of the collar 81. Since the collar 81 includes a plurality of annular plates, the axial length of the collar 81 can be adjusted by changing the number of the stacked annular plates. Note that the collar 81 may also include only a single annular plate.

As described above, the contraction-side leaf valve Vc is stacked over the piston 11 in FIG. 12 by interposing the contraction-side annular spacer 80 stacked on the inner circumferential seat portion 11f of the piston 11. While no load is applied to the contraction-side leaf valve Vc, a gap is formed between the contraction-side leaf valve Vc and the contraction-side valve seat 11c. A vertical length of this gap in FIG. 12 can be adjusted by replacing the contraction-side annular spacer 80 with another one having a different thickness or changing the number of the stacked contraction-side annular spacers 80. Note that the gap between the contraction-side leaf valve Vc and the contraction-side valve seat 11c may also be formed by directly stacking the contraction-side leaf valve Vc on the inner circumferential seat portion 11f while setting the height of the inner circumferential seat portion 11f to be higher than the height of the contraction-side valve seat 11c without providing the contraction-side annular spacer 80. However, if the contraction-side annular spacer 80 is provided, the length of the gap can be easily adjusted.

The contraction-side leaf valve Vc is bent when a biasing force generated by the pressure of the contraction-side back-pressure chamber Cc is applied from the side opposite to the piston which is the back side. However, as this biasing force increases, the contraction-side leaf valve Vc sits on the contraction-side valve seat 11c and blocks the contraction-side main passage MPc. In this state, the contraction-side main passage MPc communicates with the extension-side chamber 13 only through the notch OVc.

The contraction-side annular plate 82 is formed to have a flexural rigidity higher than that of the contraction-side leaf valve Vc. Specifically, the axial length (thickness) of the contraction-side annular plate 82 is set to be longer than the axial length (thickness) of the contraction-side leaf valve Vc. Note that the contraction-side annular plate 82 may be formed of a material having rigidity higher than that of the contraction-side leaf valve Ve without limiting to the configuration in which the rigidity is strengthened by the axial length.

The inner diameter of the contraction-side annular plate 82 is set to be smaller than the outer diameter of the inner circumferential seat portion 11f of the piston 11. The outer diameter of the contraction-side annular plate 82 is set to be larger than the inner diameter of the contraction-side valve seat 11c. When the contraction-side annular plate 82 is pressed from the back side by the pressure of the contraction-side back-pressure chamber Cc and the contraction-side spool Sc, the contraction-side annular plate 82 pushes down and bends the contraction-side leaf valve Vc. In addition, when the contraction-side leaf valve Vc is bent until it sits on the contraction-side valve seat 11c, the contraction-side annular plate 82 is supported by the inner circumferential seat portion 11f and the contraction-side valve seat 11c because the inner and outer diameters of the contraction-side annular plate 82 are set as described above. That is, the contraction-side annular plate 82 receives the pressure of the contraction-side back-pressure chamber Cc and the biasing force from the contraction-side spool Sc. Therefore, further deformation of the contraction-side leaf valve Vc is suppressed, so that it is possible to prevent an overload on the contraction-side leaf valve Vc. In addition, the subsidiary valve 101 has an outer diameter smaller than those of the contraction-side leaf valve Vc and the contraction-side annular plate 82. For this reason, when the contraction-side leaf valve Vc and the contraction-side annular plate 82 are bent by the pressure of the contraction-side main passage MPc, the outer circumferential side from the subsidiary valve 101 is more easily bent. In this manner, it is possible to tune the damping force characteristic of the contraction-side damping force using the subsidiary valve 101. Note that a plurality of subsidiary valves 101 may also be stacked. Furthermore, the subsidiary valve 101 may not be provided if the subsidiary valve 101 is not necessary due to the damping force characteristic generated in the shock absorber D2.

The contraction-side chamber 31 includes a tubular mount portion 31a fitted to the outer circumference of the holding shaft 28a of the piston holding member 28, a flange portion 31b provided in the outer circumference of the upper end of the mount portion 31a in FIG. 12, a sliding-contact tube 31c extending from the outer circumference of the flange portion 31b to the piston 11 side, an annular groove 31d provided in the inner circumference of the mount portion 31a, and a notch 31e connected to the annular groove 31d from the outer circumference of the mount portion 31a. When the contraction-side chamber 31 is assembled to the holding shaft 28a, the annular groove 31d faces the extension-side pilot orifice Oe provided in the holding shaft 28a. Note that, although the contraction-side stopper 83 is interposed between the collar 81 and the mount portion 31a of the contraction-side chamber 31, the contraction-side stopper 83 may be removed, and the mount portion 31a may serve as a stopper for restricting an upper limitation for the movement of the contraction-side annular plate 82. However, it is necessary to adjust the extension-side pilot orifice Oe and the annular groove 31d to a position where they face each other when the contraction-side chamber 31 is assembled to the holding shaft 28a of the piston holding member 28, a position of the contraction-side chamber 31 with respect to the piston holding member 28 can be adjusted by providing the contraction-side stopper 83.

The contraction-side spool Sc is housed in the sliding-contact tube 31c. An outer circumference of the contraction-side spool Sc makes sliding contact with an inner circumference of the sliding-contact tube 31c, so that the contraction-side spool Sc can move in an axial direction inside the sliding-contact tube 31c. The contraction-side spool Sc has an annular spool body 37 and an annular protrusion 38 erected from the inner circumference of the lower end of the spool body 37 in FIG. 3. The inner diameter of the annular protrusion 38 is set to be smaller than the outer diameter of the contraction-side annular plate 82. As a result, the annular protrusion 38 can abut on the upper surface of FIG. 12 which is the back side of the contraction-side annular plate 82.

When the contraction-side spool Sc is assembled to the contraction-side chamber 31, and the contraction-side chamber 31 is assembled to the holding shaft 28a in this state, the contraction-side back-pressure chamber Cc is formed in the upper side of FIG. 12 which is the back side of the contraction-side leaf valve Vc. Note that, although the spool body 37 has an inner diameter larger than the outer diameter of the mount portion 31a, the inner diameter of the spool body 37 may be set as a diameter making sliding contact with the outer circumference of the mount portion 31a to seal the contraction-side back-pressure chamber Cc with the contraction-side spool Sc.

The inner circumference of the mount portion 31a of the contraction-side chamber 31 is provided with the annular groove 31d and the notch 31e connected to the annular groove 31d from the outer circumference of the mount portion 31a. When the contraction-side chamber 31 is assembled to the holding shaft 28a, the annular groove 31d faces the extension-side pilot orifice Oe provided in the holding shaft 28a, so that contraction-side back-pressure chamber Cc communicates with the extension-side pilot orifice Oe. The contraction-side back-pressure chamber Cc also communicates with the extension-side back-pressure chamber Ce through the communication passage 44 and the contraction-side pilot orifice Oc formed in the vertical hole 28d of the holding shaft 28a.

The contraction-side chamber 31 is provided with the extension-side pressure introduction passage Ie opened from the outer circumference of the flange portion 31b. The extension-side pressure introduction passage Ie allows the extension-side chamber 13 and the contraction-side back-pressure chamber Cc to communicate with each other. The annular plate 39 is stacked on the lower end of the flange portion 31b of the contraction-side chamber 31 in FIG. 12. The annular plate 39 is pressed by the flange portion 31b by virtue of the spring MVcs interposed between the annular plate 39 and the spool body 37 of the contraction-side spool Sc to block the extension-side pressure introduction passage Ie. Note that the extension-side pressure introduction passage Ie is configured not to generate a resistance to a flow of the working oil passing therethrough.

When the extension-side chamber 13 is compressed, and the pressure increases during an extending operation of the shock absorber D2, the annular plate 39 is pressed by this pressure and separates from the flange portion 31b, so that the extension-side pressure introduction passage Ie is opened. In comparison, during a contracting operation of the shock absorber D2 in which the pressure of the contraction-side back-pressure chamber Cc becomes higher than that of the extension-side chamber 13, the annular plate 39 is pressed by the flange portion 31b, so that the extension-side pressure introduction passage Ie is blocked. That is, the annular plate 39 serves as a valve body of the check valve Cie that allows only a flow of the working oil from the extension-side chamber 13. The extension-side pressure introduction passage Ie is set as a one-way passage that allows only a flow of the working oil directed from the extension-side chamber 13 to the extension-side back-pressure chamber Cc by the check valve Cie.

As described above, the communication passage 44 communicates with the housing portion L through the annular groove 28e, the port 28f, and the horizontal hole 28g provided in the piston holding member 28. Therefore, the extension-side back-pressure chamber Ce and the contraction-side back-pressure chamber Cc communicate with each other through the extension-side pilot orifice Oe, the contraction-side pilot orifice Oc, and the communication passage 44, and also communicate with the extension-side chamber 13 through the extension-side pressure introduction passage Ie. In addition, the extension-side back-pressure chamber Ce and the contraction-side back-pressure chamber Cc communicate with the contraction-side chamber 14 through the contraction-side pressure introduction passage Ic, and also communicate with the housing portion L through the port 28f and the horizontal hole 28g.

The spring MVcs plays a role of pressing the annular plate 39 against the flange portion 31b and forms the check valve Cic along with the annular plate 39. In addition, the spring MVcs also plays a role of biasing the contraction-side spool Sc toward the contraction-side leaf valve Vc. Since the contraction-side spool Sc is biased by the spring MVcs, the contraction-side leaf valve Vc is bent. Therefore, when the bending of the contraction-side leaf valve Vc is released from the state in which the contraction-side spool Sc separates from the piston 11 (in the upward pressed state in FIG. 12), the contraction-side spool Sc can rapidly return to its original position (the position of FIG. 12) by following the contraction-side leaf valve Vc. The contraction-side spool Sc may be biased using a separate spring member. However, it is possible to reduce the number of components by sharing the spring MVcs with the check valve Cie and simplify the structure advantageously. Note that the outer diameter of the contraction-side spool Sc is set to be larger than the inner diameter of the annular protrusion 38, and the annular protrusion 38 abuts on the contraction-side annular plate 82. As a result, the contraction-side spool Sc is biased toward the contraction-side leaf valve Vc at all times by virtue of the pressure of the contraction-side back-pressure chamber Cc. Therefore, if the spring member is only aimed to bias the contraction-side spool Sc, it may not be installed.

The extension-side spool Se receives the pressure of the extension-side back-pressure chamber Ce and biases the extension-side leaf valve Ve toward the piston 11 by interposing the extension-side annular plate 86. In this case, the pressure-receiving area of the extension-side spool Se that receives the pressure of the extension-side back-pressure chamber Ce becomes a difference between an area of a circle having a diameter set to the outer diameter of the extension-side spool Se and an area of a circle having a diameter set to the inner diameter of the annular protrusion 34. The contraction-side spool Sc receives the pressure of the contraction-side back-pressure chamber Cc and biases the contraction-side leaf valve Vc toward the piston 11 by interposing the contraction-side annular plate 82. In this case, the pressure-receiving area of the contraction-side spool Sc that receives the pressure of the contraction-side back-pressure chamber Cc becomes a difference between an area of a circle having a diameter set to the outer diameter of the contraction-side spool Sc and an area of a circle having a diameter set to the inner diameter of the annular protrusion 38. In the case of the shock absorber D2 according to this embodiment, the pressure-receiving area of the extension-side spool Se is set to be larger than the pressure-receiving area of the contraction-side spool Sc.

The annular protrusion 34 of the extension-side spool Se abuts on the back side of the extension-side annular plate 86, and the extension-side annular plate 86 is mounted on the outer circumference of the collar 85. Therefore, the pressure-receiving area of the extension-side annular plate 86 formed by directly applying the pressure of the extension-side back-pressure chamber Ce becomes an area obtained by subtracting an area of a circle having a diameter set to the outer diameter of the collar 85 from an area of a circle having a diameter set to the inner diameter of the annular protrusion 34. Therefore, a force obtained by multiplying a pressure of the extension-side back-pressure chamber Ce by the area obtained by subtracting the area of the circle having a diameter set to the outer diameter of the collar 85 from the area of the circle having a diameter set to the outer diameter of the extension-side spool Se becomes an extension-side load. The extension-side leaf valve Ve is biased to the piston 11 by virtue of this extension-side load. Note that the annular protrusion 34 may directly abut on the back side of the extension-side leaf valve Ve without providing the extension-side annular plate 86. Even in this case, since the extension-side leaf valve Ve is mounted to the outer circumference of the collar 85, the same extension-side load as that of a case where the extension-side annular plate 86 is provided is applied to the extension-side leaf valve Ve.

Meanwhile, since the annular protrusion 38 of the contraction-side spool Sc abuts on the back side of the contraction-side annular plate 82, and the contraction-side annular plate 82 is mounted on the outer circumference of the collar 81, the pressure-receiving area of the contraction-side annular plate 82 to which the pressure of the contraction-side back-pressure chamber Cc is directly applied becomes an area obtained by subtracting the area of the circle having a diameter set to the outer diameter of the collar 81 from the area of the circle having a diameter set to the inner diameter of the annular protrusion 38. Therefore, a force obtained by multiplying the pressure of the contraction-side back-pressure chamber Cc by the area obtained by subtracting the area of the circle having a diameter set to the outer diameter of the collar 81 from the area of the circle having a diameter set to the outer diameter of the contraction-side spool Sc becomes a contraction-side load. The contraction-side leaf valve Vc is biased to the piston 11 by virtue of this contraction-side load. Note that the annular protrusion 38 may directly abut on the back side of the contraction-side leaf valve Vc without providing the contraction-side annular plate 82. Even in this case, since the contraction-side leaf valve Vc is mounted on the outer circumference of the collar 81, the same contraction-side load as that of a case where the contraction-side annular plate 82 is provided is applied to the contraction-side leaf valve Vc.

In the damping valve V2, if the pressure of the extension-side back-pressure chamber Ce is equal to the pressure of the contraction-side back-pressure chamber Cc, the extension-side load received by the extension-side leaf valve Ve from the extension-side back-pressure chamber Ce becomes larger than the contraction-side load received by the contraction-side leaf valve Vc from the contraction-side back-pressure chamber Cc. Note that, when the extension-side back-pressure chamber Ce is closed by the extension-side spool Se, and the pressure of the extension-side back-pressure chamber Ce is not directly applied to the extension-side annular plate 86, the extension-side load is determined by only the pressure-receiving area of the extension-side spool Se formed by receiving the pressure of the extension-side back-pressure chamber Ce. Similarly, in the case of the contraction side, if the contraction-side back-pressure chamber Cc is closed by the contraction-side spool Sc, and the pressure of the contraction-side back-pressure chamber Cc is not directly applied to the contraction-side annular plate 82, the contraction-side load is determined by only the pressure-receiving area of the contraction-side spool Sc formed by receiving the pressure of the contraction-side back-pressure chamber Cc. If the pressure of the extension-side back-pressure chamber Ce is equal to the pressure of the contraction-side back-pressure chamber Cc, the extension-side load received by the extension-side leaf valve Ve from the extension-side back-pressure chamber Ce may be set to be larger than the contraction-side load received by the contraction-side leaf valve Vc from the contraction-side back-pressure chamber Cc. Therefore, if the pressures are not directly applied to both the extension-side leaf valve Ve and the contraction-side leaf valve Vc from the extension-side back-pressure chamber Ce and the contraction-side back-pressure chamber CC, respectively, the pressure-receiving area of the extension-side spool Se may be set to be larger than the pressure-receiving area of the contraction-side spool Sc. If the extension-side annular plate 86 and the contraction-side annular plate 82 are not provided as described above, the pressure of the extension-side back-pressure chamber Ce may be directly applied to the extension-side leaf valve Ve, and the pressure of the contraction-side back-pressure chamber Cc may be directly applied to the contraction-side leaf valve Vc. In a structure in which the extension-side back-pressure chamber Ce is closed by the extension-side spool Se, the extension-side spool Se may abut on the extension-side leaf valve Ve. In a structure in which the contraction-side back-pressure chamber Cc is closed by the contraction-side spool Sc, the contraction-side spool Sc may abut on the contraction-side leaf valve Vc. Whether or not the extension-side back-pressure chamber Ce and the contraction-side back-pressure chamber Cc are closed by a spool may be selected arbitrarily. According to this embodiment, since the extension-side spool Se and the contraction-side spool Sc are employed, the pressure-receiving area of the extension-side leaf valve Ve formed by substantially applying the pressure of the extension-side back-pressure chamber Ce can be set to be larger than the pressure-receiving area of only the extension-side leaf valve Ve. In this manner, since a difference of the pressure-receiving area between the contraction-side spool Sc and the extension-side spool Se can be set to be large, it is possible to provide a significant difference between the extension-side load and the contraction-side load. Therefore, it is possible to provide a very high degree of freedom in a setting range of the extension-side load and the contraction-side load.

During an extending operation of the shock absorber D2, the extension-side leaf valve Ve receives a pressure from the extension-side chamber 13 through the extension-side main passage MPe and receives the extension-side load from the back side. If the extension-side load is larger than a pressing-down force caused by the pressure of the extension-side chamber 13, and the extension-side leaf valve Ve is bent until it abuts on the extension-side valve seat 11d, the extension-side main passage MPe is blocked. The extension-side load when the extension-side leaf valve Ve blocks the extension-side main passage MPe at a certain piston speed during an extending operation of the shock absorber D2 may be set depending on the pressure-receiving area to which the pressure of the extension-side back-pressure chamber Ce is applied, the flexural rigidities of the extension-side leaf valve Ve and the extension-side annular plate 86, and the like. Similar to the extension-side leaf valve Ve, in the case of the contraction-side leaf valve Vc, the contraction-side load when the contraction-side leaf valve Vc blocks the contraction-side main passage MPc at a certain piston speed during a contracting operation of the shock absorber D2 may be set depending on the pressure-receiving area to which the pressure of the contraction-side back-pressure chamber Cc is applied, the flexural rigidities of the contraction-side leaf valve Vc and the contraction-side annular plate 82, and the like.

The pressure regulating passage Pc allows the extension-side back-pressure chamber Ce and the contraction-side back-pressure chamber Cc arranged in the upstream and the extension-side pressure discharge passage Ee and the contraction-side pressure discharge passage Ec arranged in the downstream to communicate with each other. The electromagnetic valve EV having the shut-off valve SV and the pressure control valve PV is provided in the regulating passage Pc to control the pressures of the extension-side back-pressure chamber Ce and the contraction-side back-pressure chamber Cc in the upstream. Therefore, in a case where the pressures of the extension-side back-pressure chamber Ce and the contraction-side back-pressure chamber Cc arc controlled by the pressure control valve PV, the pressure of the extension-side back-pressure chamber Ce is equal to the pressure of the contraction-side back-pressure chamber Cc, so that the extension-side load can be set to be larger than the contraction-side load. In addition, in a case where a large extension-side load is demanded, it is possible to remove necessity of increasing so much the pressure of the extension-side back-pressure chamber Ce by increasing the pressure-receiving area to which the pressure of the extension-side back-pressure chamber Ce is applied. Therefore, the maximum pressure to be controlled by the pressure control valve PV can be lowered.

Note that, according to this embodiment, the inner circumference of the extension-side spool Se does not make sliding contact with the outer circumference of the mount portion 32a of the extension-side chamber 32. Therefore, the pressure of the extension-side back-pressure chamber Ce is also applied to the inside of the abutting portion of the annular protrusion 34 in the back side of the extension-side leaf valve Ve to bias the extension-side leaf valve Ve. For this reason, the extension-side load may be set by adding the load generated by the pressure of the extension-side back-pressure chamber Ce to directly bias the extension-side leaf valve Ve. Similarly, since the inner circumference of the contraction-side spool Sc does not make sliding contact with the outer circumference of the mount portion 31a of the contraction-side chamber 31, the pressure of the contraction-side back-pressure chamber Cc is also applied to the inside of the abutting portion of the annular protrusion 38 in the back side of the contraction-side leaf valve Vc to bias the contraction-side leaf valve Vc. For this reason, the contraction-side load may be set by adding the load generated by the pressure of the contraction-side back-pressure chamber Cc to directly bias the contraction-side leaf valve Vc.

According to this embodiment, the shut-off valve SV closes the regulating passage Pc in a non-energization state and opens the regulating passage Pc in a energization state to allow a pressure control using the pressure control valve PV. In addition, as illustrated in FIG. 10, the regulating passage Pc has the first failsafe passage FP1 for bypassing the shut-off valve SV and the second failsafe passage FP2 for bypassing the electromagnetic valve EV.

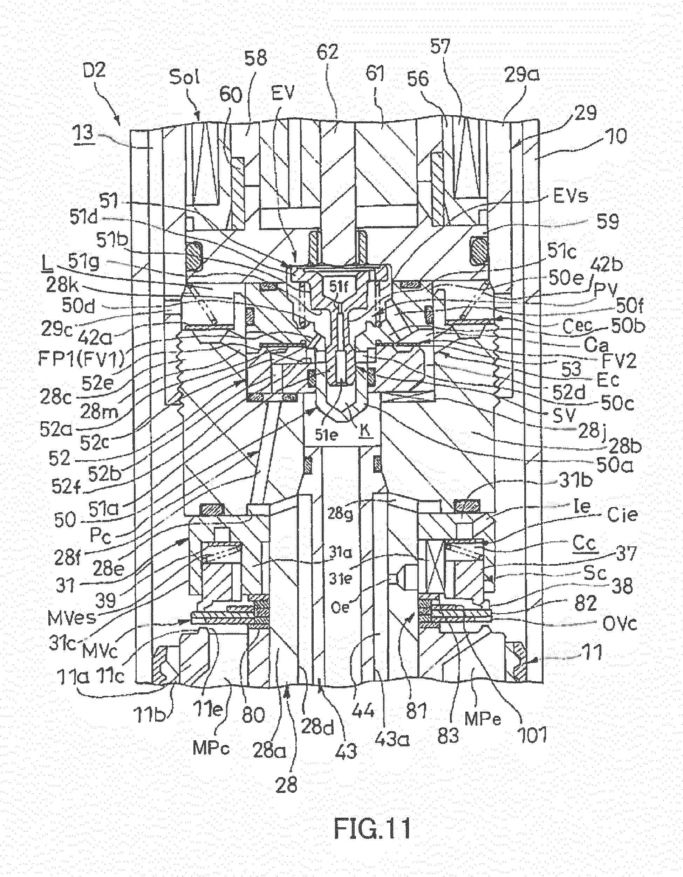

As illustrated in FIGS. 10 and 11, the electromagnetic valve EV includes a valve seat member 50 provided with a valve housing tube 50a and a control valve seat 50d, a valve body 51 of the electromagnetic valve that separates from or sits on the control valve seat 50d, and a solenoid Sol that applies a drive force to the valve body 51 and drives the valve body 51 in an axial direction.

The valve seat member 50 includes a bottomed cylindrical valve housing tube 50a into which the valve body 51 is slidably inserted, a flange 50b connected to the outer circumference of the upper end of the valve housing tube 50a in FIG. 11, an access port 50c opened from the lateral side of the valve housing tube 50a and connected to the inside, an annular control valve seat 50d protruding in the axial direction from the upper end of the flange 50b in FIG. 11, a large-diameter tubular portion 50e erected from the outer circumference of the flange 50b and provided with a tapered portion in the lower end, a first failsafe passage FP1 connected to the inner circumferential side of the control valve seat 50d through the flange 50d, and a port 50f opened from the tapered portion of the large-diameter tubular portion 50e to allow the inside and the outside of the large-diameter tubular portion 50e to communicate with each other. The valve seat member 50 is fitted to the socket 28c of the piston holding member 28, and the valve housing tube 50a is inserted into the inner circumference of the annular valve housing 52 stacked on the upper end of the flange 28b in FIG. 2. As a result, the valve seat member 50 is housed in the housing portion L while it is positioned in the radial direction.

The first failsafe passage FP1 is an orifice itself, so that the first failsafe passage FP1 also serves as the first failsafe valve FV1.

As illustrated in FIG. 11, the valve housing 52 includes an annular window 52a provided in the upper end in FIG. 11, a port 52b opened from the annular window 52a and connected to the lower end in FIG. 11, a notched groove 52c opened from the inner circumference of the upper end in FIG. 11 and connected to a port 52b, a groove 52d provided in the outer circumference along the axial direction, a second annular failsafe valve seat 52e of the second failsafe valve that surrounds the outer circumference of the annular window 52a, and a recess 52f provided in the inner circumference of the upper end side of FIG. 11 and connected to the notched groove 52c.

When the valve housing 52 is inserted into the socket 28c and is stacked on the upper end of the flange 28b in FIG. 11 while the port 52b faces the opening of the port 28f, the port 52b and the notched groove 52c communicate with the port 28f, and the groove 52d communicates with the groove 28j provided in the flange 28b while facing each other.

Therefore, the port 52b and the notched groove 52c communicate with the communication passage 44 through the port 28f, the annular groove 28e, and the horizontal hole 28g and also communicate with the extension-side back-pressure chamber Ce and the contraction-side back-pressure chamber Cc through the communication passage 44, the extension-side pilot orifice Oe, and the contraction-side pilot orifice Oc. In addition, the groove 52d communicates with the contraction-side chamber 14 through the groove 28j and the extension-side pressure discharge passage Ee formed by the separator 43 and the check valve Cee, and communicates with the extension-side chamber 13 through the contraction-side pressure discharge passage Ec formed by the through-hole 28m and the check valve Cec, the recess 28k, and the access port 29c.

The valve housing tube 50a of the valve seat member 50 is housed in the valve housing 52. In addition, the annular leaf valve 53 is mounted on the outer circumference of the valve housing tube 50a of the valve seat member 50. When the valve seat member 50 is assembled to the valve housing 52 by inserting the valve housing tube 50a into the valve housing 52, the leaf valve 53 is fixed because its inner circumference is nipped between the flange 50b of the valve seat member 50 and the inner circumference of the upper end of the valve housing 52 in FIG. 11. The leaf valve 53 sits on the second failsafe valve seat 52e provided in the valve housing 52 with an initial deformation applied to its outer circumferential side so as to close the annular window 52a. In addition, the large-diameter tubular portion 50e of the valve seat member 50 is provided with a tapered portion whose diameter increases from the valve housing 52 in the lower end side of FIG. 11. As a result, as the valve seat member 50 is assembled to the valve housing 52, a cavity Ca is formed between the large-diameter tubular portion 50e and the valve housing 52. The leaf valve 53 is bent to open the annular window 52a when the pressure applied to the annular window 52a through the port 52b reaches the valve-opening pressure. As the annular window 52a is opened, the port 52b communicates with the extension-side pressure discharge passage Ee and the contraction-side pressure discharge passage Ec through the cavity Ca. According to this embodiment, the second failsafe valve FV2 is formed by the leaf valve 53 and the second failsafe valve seat 52e. As the second failsafe valve FV2 is opened, the port 52b directly communicates with the extension-side pressure discharge passage Ee and the contraction-side pressure discharge passage Ec by bypassing the electromagnetic valve EV, that is, through the cavity Ca. According to this embodiment, the annular window 52a and the cavity Ca serve as the second failsafe passage FP2.

When the valve seat member 50 is assembled to the valve housing 52, the recess 52f provided in the valve housing 52 faces the access port 50c provided in the valve housing tube 50a. Therefore, the extension-side back-pressure chamber Ce and the contraction-side back-pressure chamber Cc communicate with the valve housing tube 50a through the port 52b. In addition, the first failsafe passage FP1 can bypass the shut-off valve SV while facing the recess 52f.

The solenoid Sol housed in the electromagnetic valve housing tube 29 is arranged over the large-diameter tubular portion 50e of the valve seat member 50 in FIG. 11. When the electromagnetic valve housing tube 29 is screwed and integrated to the piston holding member 28, the valve housing 52, the leaf valve 53, the valve seat member 50, and the solenoid Sol are interposed and fixed between the electromagnetic valve housing tube 29 and the piston holding member 28.

As illustrated in FIG. 10, the solenoid Sol includes a topped cylindrical mold stator 56 formed by integrating a coil 57 and a harness H for energizing the coil 57 with a mold resin, a topped cylindrical first stator core 58 fitted to the inner circumference of the mold stator 56, an annular second stator core 59 stacked on the lower end of the mold stator 56 in FIG. 11, a filler ring 60 interposed between the first and second stator cores 58 and 59 to form a magnetic cavity, a tubular movable iron core 61 arranged to move in the axial direction to the inner circumferential sides of the first and second stator cores 58 and 59, and a shaft 62 fixed to the inner circumference of the movable iron core 61. As the coil 57 is energized, the solenoid Sol attracts the movable iron core 61 to apply a drive force to the shaft 62 downward in FIG. 11.

The valve body 51 of the electromagnetic valve is slidably inserted into the valve seat member 50. The valve body 51 includes a small-diameter portion 51a slidably inserted into the valve housing tube 50a of the valve seat member 50, a large-diameter portion 51b provided in the side opposite to the valve seat member over the small-diameter portion 51a in FIG. 11 with a diameter larger than that of the small-diameter portion 51a, an annular recess 51c provided between the small-diameter portion 51a and the large-diameter portion 51b, a flange-shaped spring bearing portion 51d provided in the outer circumference of the large-diameter portion 51b in the end of the side opposite to the valve seat member, a communication channel 51e penetrating from the front end to the rear end of the valve body 51, and an orifice 51f provided in the communication channel 51e.

The valve body 51 has the large-diameter portion 51b formed such that the outer diameter of the side opposite to the valve seat member with respect to the recess 51c is larger than the diameter of the small-diameter portion 51a. The valve body 51 has a seat portion 51g facing the control valve seat 50d of the lower end of the large-diameter portion 51b in FIG. 11. As the valve body 51 moves in the axial direction with respect to the valve seat member 50, the seat portion 51g separates from or sits on the control valve seat 50d.

A spring EVs for biasing the valve body 51 to recede from the valve seat member 50 is provided between the flange 50b of the valve seat member 50 and the spring bearing portion 51d. The solenoid Sol exerts a drive force opposing to the biasing force of the spring EVs. Therefore, the valve body 51 is biased by the spring EVs to recede from the valve seat member 50 at all times. When the drive force opposing to the spring EVs is not applied from the solenoid Sol, the valve body 51 is positioned in a location farthest from the valve seat member 50. Note that, although the valve body 51 is biased to recede from the valve seat member 50 using the spring EVs in this embodiment, any elastic member capable of exerting the biasing force other than the spring EVs may also be employed.

The biasing force for pressing the valve body 51 toward the valve seat member 50 is adjusted by controlling the drive force of the solenoid Sol, so that the valve-opening pressure for separating the seat portion 51g of the valve body 51 from the control valve seat 50d is controlled. In this manner, according to this embodiment, the seat portion 51g of the valve body 51, the control valve seat 50d of the valve seat member 50, and the solenoid Sol constitute the pressure control valve PV.

As the valve body 51 fully separates from the valve seat member 50, the access port 50c is blocked while the access port 50c faces the small-diameter portion 51a. In addition, as the solenoid Sol is energized, and the valve body 51 moves from the location farthest from the valve seat member 50 toward the valve seat member side by a predetermined length, the access port 50c is opened while the recess 51c faces the access port 50c. That is, the valve body 51 is configured to open and close the access port 50c of the valve seat member 50. According to this embodiment, the small-diameter portion 51a of the valve body 51 and the access port 50c of the valve seat member constitute the shut-off valve SV. Therefore, the valve seat member 50, the valve body 51, and the solenoid Sol constitute the electromagnetic valve EV by integrating the shut-off valve SV and the pressure control valve PV.

As the small-diameter portion 51a of the valve body 51 opens the access port 50c, and the seat portion 51g separates from the control valve seat 50d, the access port 50c communicates with the extension-side pressure discharge passage Ee and the contraction-side pressure discharge passage Ec through the recess 51c, the port 50f, and the cavity Ca of the valve body 51.

When the current can be normally supplied to the solenoid Sol, the force for biasing the valve body 51 toward the valve seat member 50 side can be adjusted by adjusting the drive force of the solenoid Sol as described above. If the force of pushing up the valve body 51 in FIG. 11 by virtue of the pressure of the upstream of the pressure control valve PV and the biasing force of the spring EVs is stronger than the force of pressing down the valve body 51 by virtue of the solenoid Sol, the pressure control valve PV is opened. Therefore, the pressure of the upstream side of the pressure control valve PV for opening the pressure control valve PV, that is, the valve-opening pressure of the pressure control valve PV can be controlled by adjusting the drive force of the solenoid Sol. In addition, since the upstream of the pressure control valve PV communicates with the extension-side back-pressure chamber Ce and the contraction-side back-pressure chamber Cc through the regulating passage Pc, it is possible to control the pressures of the extension-side back-pressure chamber Ce and the contraction-side back-pressure chamber Cc at the same time using the pressure control valve PV. In addition, since the downstream of the electromagnetic valve EV communicates with the extension-side pressure discharge passage Ee and the contraction-side pressure discharge passage Ec, the working oil passing through the electromagnetic valve EV is discharged to the contraction-side chamber 14 having a lower pressure during an extending operation of the shock absorber D2 and is discharged to the extension-side chamber 13 having a lower pressure during a contracting operation of the shock absorber D2. In this manner, according to this embodiment, the regulating passage Pc is formed by the horizontal hole 28g, the annular groove 28e, the port 28f, the port 52b, the notched groove 52c, the recess 52f, a part of the housing portion L, the cavity Ca, and the groove 52d.

The shut-off valve SV has a shut-off position SVs in which the access port 50c of the valve seat member 50 is blocked by the small-diameter portion 51a of the valve body 51 during a failure state in which it is difficult to normally supply the current to the solenoid Sol (refer to FIG. 7). The first failsafe passage FP1 allows the recess 52f of the upstream of the access port 50c, which is the upstream of the shut-off valve SV, to communicate with the inner circumferential side relative to the control valve seat 50d in the downstream of the shut-off valve SV, that is, the upstream of the pressure control valve PV. In this manner, the first failsafe passage FP1 and the shut-off valve SV are arranged in parallel in the upstream of the pressure control valve PV. In addition, in a normal state in which the shut-off valve SV is opened, the first failsafe valve FV1 of the first failsafe passage FP1 does not affect the pressure control of the pressure control valve PV. In comparison, in a case where the shut-off valve SV is set to a shut-off position, the pressure control valve PV integrated to the shut-off valve SV separates from the valve seat member 50 as far as possible to fully open the pressure control valve PV. As a result, the working oil can pass through the regulating passage Pc through the first failsafe passage FP1 and the pressure control valve PV.

The second failsafe passage FP2 is configured to bypass the electromagnetic valve EV. The second failsafe valve FV2 provided in the second failsafe passage FP2 opens and closes the annular window 52a connected to the port 52b. As described above, the valve-opening pressure of the second failsafe valve FV2 is set to a pressure exceeding an upper limit pressure controllable by the pressure control valve PV. Therefore, in a case where the pressure of the upstream side of the pressure control valve PV exceeds the controllable upper limit pressure, the second failsafe valve FV2 is opened, so that the pressures of the extension-side back-pressure chamber Ce and the contraction-side back-pressure chamber Cc can be controlled to the valve-opening pressure of the second failsafe valve FV2.

Therefore, in a case where the shut-off valve SV is set to a shut-off position during a failure state, the pressures of the extension-side back-pressure chamber Ce and the contraction-side back-pressure chamber Cc are controlled by the first and second failsafe valves FV1 and FV2.

As the valve body 51 is inserted into the valve housing tube 50a of the valve seat member 50, a space K is formed in the front side relative to the access port 50c inside the valve housing tube 50a. The space K communicates with the outside of the valve body 51 through the communication channel 51e and the orifice 51f provided in the valve body 51. As a result, when the valve body 51 moves in the axial direction vertically in FIG. 11 with respect to the valve seat member 50, the space K serves as a dash pot to suppress an abrupt displacement of the valve body 51 and an oscillating motion of the valve body 51.

Next, operation of the shock absorber D2 will be described.

First, a case where the damping force characteristic of the damping force of the shock absorber D2 has a soft setting, that is, the force for biasing the extension-side leaf valve Ve by virtue of the pressure of the extension-side back-pressure chamber Ce and the force for biasing the contraction-side leaf valve Vc by virtue of the pressure of the contraction-side back-pressure chamber Cc are set to be small to provide a small damping coefficient will be described. In order to set the damping force characteristic to a soft setting, the solenoid Sol is energized, and the resistance applied to the working oil passing through the electromagnetic valve EV is set to be small. In this case, the biasing force is controlled such that the extension-side leaf valve Ve and the contraction-side leaf valve Vc do not sit on the extension-side valve seat 11d and the contraction-side valve seat 11.c, respectively.

In this state, even when the extension-side leaf valve Ve is bent by the biasing force caused by the pressure of the extension-side back-pressure chamber Cc, the extension-side leaf valve Ve does not sit on the extension-side valve seat 11d, and a gap is formed therebetween. Similarly, in the case of the contraction-side leaf valve Vc, even when the contraction-side leaf valve Vc is bent by the biasing force caused by the pressure of the contraction-side back-pressure chamber Cc, the contraction-side leaf valve Vc does not sit on the contraction-side valve seat 11c, and a gap is formed therebetween.

In this state, if the shock absorber D2 is extended, and the piston 11 moves upward in FIG. 10, the extension-side leaf valve Ve is bent by virtue of the pressure of the working oil inside the compressed extension-side chamber 13, and the working oil in the extension-side chamber 13 moves to the contraction-side chamber 14 through the extension-side main passage MPe. Since the gap is formed between the extension-side leaf valve Ve and the extension-side valve seat 11d, a large flow passage area is obtained, compared to a state in which the extension-side leaf valve Ve sits on the extension-side valve seat 11d, and the extension-side main passage MPe and the contraction-side chamber 14 communicate with each other only through the notch OVe.

Since the extension-side leaf valve Ve can make sliding contact with the outer circumference of the collar 85, the extension-side leaf valve Ve recedes from the piston 11 along with the extension-side annular plate 86 and the subsidiary valve 91 by virtue of the pressure of the extension-side chamber 13 that increases during the extension of the shock absorber D2. As a result, a gap between the extension-side leaf valve Ve and the extension-side valve seat 11d increases. The gap between the extension-side leaf valve Ve and the extension-side valve seat 11d is determined by a balance between the force of forcing the extension-side leaf valve Ve to recede from the piston 11 by virtue of the pressure of the extension-side chamber 13 received from the extension-side main passage MPe side and the extension-side load received by the extension-side leaf valve Ve.

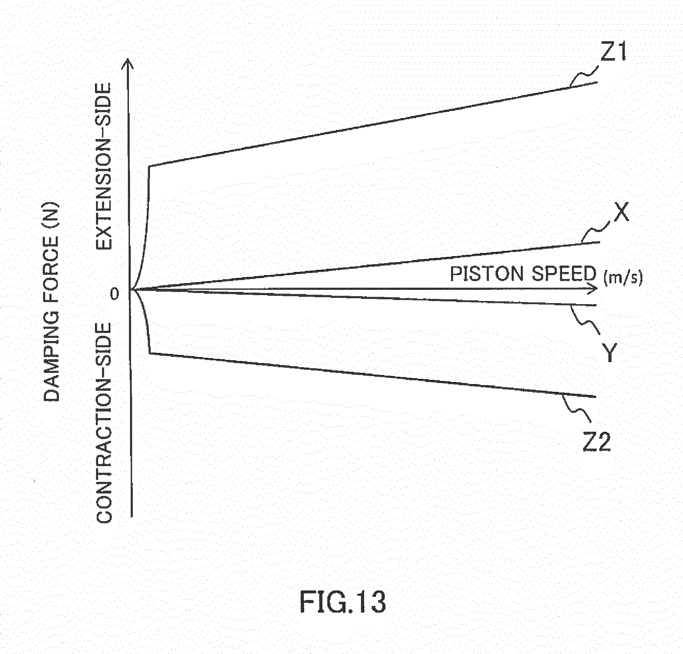

In order to reduce the damping force generated when the damping force characteristic has a soft setting, it is necessary to set the rigidity of the extension-side leaf valve Ve as low as possible. However, since the extension-side leaf valve Ve is also necessary to endure a large extension-side load, there is a limitation in reduction of the rigidity of the extension-side leaf valve Ve. In the shock absorber D2 according to this embodiment, a gap is generated between the extension-side leaf valve Ve and the extension-side valve seat 11d, and the whole extension-side leaf valve Ve can recede from the piston 11. Therefore, it is possible to obtain a large flow passage area between the extension-side leaf valve Ve and the extension-side valve seat 11d while securing the rigidity necessary in the extension-side leaf valve Ve. In this manner, in the shock absorber D2 according to this embodiment, it is possible to solve a problem of the durability of the extension-side leaf valve Ve. Therefore, as indicated by the line X in FIG. 13, it is possible to realize an extremely small slope of the damping coefficient and remarkably reduce the damping force by setting the damping force characteristic to the soft setting.

If the extension speed of the shock absorber D2 increases, and the pressure of the extension-side chamber 13 further increases, a recession length of the extension-side leaf valve Ve from the piston 11 increases, and the subsidiary valve 91 abuts on the extension-side stopper 87. As a result, further recession of the inner circumferential portions of the extension-side leaf valve Ve, the extension-side annular plate 86, and the subsidiary valve 91 is restricted. Therefore, the outer circumferential portions of the extension-side leaf valve Ve, the extension-side annular plate 86, and the subsidiary valve 91 arc bent with respect to the extension-side stopper 87. The amount of this bending is determined by a balanced position between the force of bending the extension-side leaf valve Ve, the extension-side annular plate 86, and the subsidiary valve 91 by virtue of the pressure of the extension-side chamber 13 received from the extension-side main passage MPe side, a spring reaction force by which the extension-side leaf valve Ve, the extension-side annular plate 86, and the subsidiary valve 91 return to the extension-side valve seat 11d side by themselves in response to this bending amount, and the extension-side load. In this manner, the extension-side main passage MPe is opened by bending the extension-side leaf valve Ve.

The working oil in the extension-side chamber 13 forcibly opens the check valve Cie, passes through the extension-side pressure introduction passage Ie, and flows to the regulating passage Pc. The working oil passing through the regulating passage Pc forcibly opens the check valve Cee and is discharged to the contraction-side chamber 14 having a lower pressure through the extension-side pressure discharge passage Ee. Note that the extension-side pilot orifice Oe generates a pressure loss because it applies a resistance when the working oil passes. In addition, since the pressure of the downstream of the regulating passage Pc becomes lower than that of the extension-side chamber 13 while the working oil flows, the check valve Cec provided in the contraction-side pressure discharge passage Ec still remain in the blocked state without being opened.

The extension-side pressure introduction passage Ie is connected to the contraction-side back-pressure chamber Cc and communicates with the extension-side back-pressure chamber Ce through the communication passage 44, and the contraction-side pressure introduction passage Ic is blocked by the check valve Cic. Therefore, it is possible to increase the pressure of the extension-side back-pressure chamber Ce over the pressure of the contraction-side chamber 14 during an extending operation of the shock absorber D2. Note that, although the pressure of the contraction-side back-pressure chamber Cc becomes higher than that of the contraction-side chamber 14 which is the low-pressure side, there is no problem because only the contraction-side leaf valve Vc that blocks the contraction-side main passage MPc where no flow of the working oil is generated is biased.

The regulating passage Pc is provided with the electromagnetic valve EV having the pressure control valve PV as described above. For this reason, by energizing the solenoid Sol and controlling the pressure of the upstream side of the regulating passage Pc using the pressure control valve PV, it is possible to control the extension-side load to a desired load by adjusting the pressure of the extension-side back-pressure chamber Ce. In this manner, in the shock absorber D2, it is possible to control the opening level of the extension-side leaf valve Ve using the pressure control valve PV and the extension-side damping force for performing an extending operation of the shock absorber D2.

Reversely, if the shock absorber D2 is contracted, and the piston 11 moves downward in FIG. 10, the contraction-side leaf valve Vc is bent by virtue of the pressure of the working oil in the compressed contraction-side chamber 14, and the working oil in the contraction-side chamber 14 moves to the extension-side chamber 13 through the contraction-side main passage MPc. Since a gap is formed between the contraction-side leaf valve Vc and the contraction-side valve seat 11c, it is possible to obtain a large flow passage area, compared to a state in which the contraction-side leaf valve Vc sits on the contraction-side valve seat 11c, and the contraction-side main passage MPc and the extension-side chamber 13 communicate with each other only through the notch Ovc.

Since the contraction-side leaf valve Vc can make sliding contact with the outer circumference of the collar 81, the contraction-side leaf valve Vc recedes from the piston 11 along with the contraction-side annular plate 82 and the subsidiary valve 101 by virtue of the pressure of the contraction-side chamber 14 that increases as the shock absorber D2 is contracted. As a result, the gap between the contraction-side leaf valve Vc and the contraction-side valve seat 11c increases. The gap between the contraction-side leaf valve Vc and the contraction-side valve seat 11c is determined by a balance between the force of forcing the contraction-side leaf valve Vc to recede from the piston 11 by virtue of the pressure of the contraction-side chamber 14 received from the contraction-side main passage MPc side and the contraction-side load received by the contraction-side leaf valve Vc.

In order to reduce the damping force generated by setting the damping force characteristic to the soft setting, it is necessary to reduce the rigidity of the contraction-side leaf valve Vc as low as possible. However, similar to the extension-side leaf valve Ve, the contraction-side leaf valve Vc is necessary to endure the large contraction-side load, so that there is a limitation in reduction of the rigidity of the contraction-side leaf valve Vc. In the shock absorber D2 according to this embodiment, the gap is formed between the contraction-side leaf valve Vc and the contraction-side valve seat 11c, and the whole contraction-side leaf valve Vc can recede from the piston 11. Therefore, it is possible to obtain a large flow passage area between the contraction-side leaf valve Vc and the contraction-side valve seat 11c while securing the rigidity necessary in the contraction-side leaf valve Vc. In this manner, in the shock absorber D2 according to this embodiment, it is possible to solve a problem of durability of the contraction-side leaf valve Vc. Therefore, as indicated by the line Y in FIG. 13, it is possible to realize an extremely small slope of the damping coefficient and remarkably reduce the damping force by setting the damping force characteristic to the soft setting.

As the contraction speed of the shock absorber D2 increases, and the pressure of the contraction-side chamber 14 further increases, the recession length of the contraction-side leaf valve Vc from the piston 11 increases, and the subsidiary valve 101 abuts on the contraction-side stopper 83. As a result, further recession in the inner circumferential portions of the contraction-side leaf valve Vc, the contraction-side annular plate 82, and the subsidiary valve 101 is restricted. Therefore, the outer circumferential portions of the contraction-side leaf valve Vc, the contraction-side annular plate 82, and the subsidiary valve 101 are bent with respect to the contraction-side stopper 83. This bending amount is determined by a balance position between the force of bending the contraction-side leaf valve Vc, the contraction-side annular plate 82, and the subsidiary valve 101 by virtue of the pressure of the contraction-side chamber 14 received from the contraction-side main passage MPc side, a spring reaction force by which the contraction-side leaf valve Vc, the contraction-side annular plate 82, and the subsidiary valve 101 return to the contraction-side valve seat 11c side by themselves in response to this bending amount, and the contraction-side load. In this manner, the contraction-side main passage MPc is opened by bending the contraction-side leaf valve Vc.

The working oil in the contraction-side chamber 14 forcibly opens the check valve Cic, passes through the contraction-side pressure introduction passage Ic, and flows to the regulating passage Pc. The working oil passing through the regulating passage Pc forcibly opens the check valve Cec and is discharged to the extension-side chamber 13 having a lower pressure through the contraction-side pressure discharge passage Ec. Note that the contraction-side pilot orifice Oc generates a pressure loss because it applies a resistance when the working oil passes. In addition, since the pressure of the downstream of the regulating passage Pc becomes lower than that of the contraction-side chamber 14 while the working oil flows, the check valve Cee provided in the extension-side pressure discharge passage Ee still remain in the blocked state without being opened.

Since the contraction-side pressure introduction passage Ic is connected to the extension-side back-pressure chamber Ce and also communicates with the contraction-side back-pressure chamber Cc through the communication passage 44, and the extension-side pressure introduction passage Ie is blocked by the check valve Cie, it is possible to set the pressure of the contraction-side back-pressure chamber Cc to be higher than the pressure of the extension-side chamber 13 during a contracting operation of the shock absorber D2. Note that, although the pressure of the extension-side back-pressure chamber Ce becomes higher than the extension-side chamber 13 which is a low pressure side, there is no problem because only the extension-side leaf valve Ve that blocks the extension-side main passage MPe where a flow of the working oil does not generate is biased.

The regulating passage Pc is provided with the electromagnetic valve EV as described above. For this reason, it is possible to control the contraction-side load to a desired load by adjusting the pressure of the contraction-side back-pressure chamber Cc by energizing the solenoid Sol of the electromagnetic valve EV and controlling the pressure of the upstream side of the regulating passage Pc using the pressure control valve PV. In this manner, in the shock absorber D2, it is possible to control the opening level of the contraction-side leaf valve Vc using the electromagnetic valve EV and control the contraction-side damping force when the contracting operation of the shock absorber D2 is performed.

Subsequently, a case where the damping force characteristic of the damping force of the shock absorber D2 has a hard setting, that is, the damping coefficient is set to be high by increasing the biasing force for biasing the extension-side leaf valve Ve and the contraction-side leaf valve Vc. In order to set the damping force characteristic to a hard setting, the solenoid Sol is energized, so that the resistance applied by the electromagnetic valve EV to the passing working oil increases. In this case, the biasing force is controlled such that the extension-side leaf valve Ve and the contraction-side leaf valve Vc sit on the extension-side valve seat 11d and the contraction-side valve seat 11c, respectively.

In this state, the extension-side leaf valve Ve is bent by the pressure of the extension-side back-pressure chamber Ce and the biasing force from the spring MVes and sits on the extension-side valve seat 11d. That is, in this state, a gap is not formed therebetween. Similarly, in the case of the contraction-side leaf valve Vc, the contraction-side leaf valve Vc is bent by the pressure of the contraction-side back-pressure chamber Cc and the biasing force from the spring MVcs and sits on the contraction-side valve seat 11c. That is, in this state, a gap is not formed therebetween.

In this state, if the shock absorber D2 is extended, the piston moves upward in FIG. 10, and the piston speed is slow, the extension-side leaf valve Ve does not separate from the extension-side valve seat 11d even when it receives the pressure of the extension-side chamber 13 from the extension-side main passage MPe. In addition, the extension-side chamber 13 communicates with the contraction-side chamber 14 only through the notch OVe without using the regulating passage Pc. Therefore, in the shock absorber D2, by applying the resistance to the flow of the working oil passing through the extension-side main passage MPe predominantly using the notch OVe serving as an orifice, it is possible to exert a larger damping force relative to that generated by forming the gap between the extension-side leaf valve Ve and the extension-side valve seat 11d.

Meanwhile, if the piston speed becomes fast, and the pressure of the extension-side chamber 13 applied to the extension-side leaf valve Ve through the extension-side main passage MPe increases and exceeds the biasing force that separates the extension-side leaf valve Ve from the extension-side valve seat 11d by virtue of the pressure of the extension-side chamber 13, the whole extension-side leaf valve Ve recedes from the piston 11, and the extension-side annular plate 86, the subsidiary valve 91, and the extension-side spool Se are pressed down in FIG. 12, so that the extension-side leaf valve Ve separates from the extension-side valve seat 11d. However, since the biasing force is relatively strong, compared to a situation in which the damping force characteristic has a soft setting, the recession length of the extension-side leaf valve Ve from the piston 11 is reduced. If the piston speed becomes fast, and the pressure of the extension-side chamber 13 further increases, the extension-side leaf valve Ve, the extension-side annular plate 86, and the subsidiary valve 91 further recede from the piston 11. In addition, as the subsidiary valve 91 abuts on the extension-side stopper 87, the extension-side leaf valve Ve is bent along with the extension-side annular plate 86 and the subsidiary valve 91 and presses down the extension-side spool Se in FIG. 12, so that a gap is formed between the extension-side leaf valve Ve and the extension-side valve seat 11d. That is, a flow passage area between the extension-side leaf valve Ve and the extension-side valve seat 11d increases. However, since the biasing force is relatively strong, compared to a situation in which the damping force characteristic is set to a soft setting, the flow passage area between extension-side leaf valve Ve and the extension-side valve seat 11d is reduced, compared to a case where the damping force characteristic has the soft setting. Therefore, as indicated by the line Z1 in FIG. 13, the shock absorber D2 exerts a stronger damping force in the hard damping force characteristic, compared to the soft damping force characteristic, even under the same piston speed.

Similar to a case where the damping force characteristic has the soft setting, the working oil in the extension-side chamber 13 forcibly opens the check valve Cie, passes through the extension-side pressure introduction passage Ie, and also flows to the regulating passage Pc. If the pressure of the upstream side of the regulating passage Pc is controlled by the pressure control valve PV provided in the regulating passage Pc, the extension-side load can be controlled to a desired load by adjusting the pressure of the extension-side back-pressure chamber Ce in a similar way to the soft setting. Even in the hard setting, the opening level of the extension-side leaf valve Ve is controlled, and the extension-side damping force for performing the extending operation of the shock absorber D2 is controlled.

Then, if the shock absorber D2 is contracted, the piston 11 moves downward in FIG. 10, and the piston speed is slow, the contraction-side leaf valve Vc does not separate from the contraction-side valve seat 11c even when it receives the pressure of the contraction-side chamber 14 from the contraction-side main passage MPc. In addition, the contraction-side chamber 14 communicates with the extension-side chamber 13 only through the notch OVc by excluding the regulating passage Pc. Therefore, the shock absorber D2 applies the resistance to the flow of the working oil passing through the contraction-side main passage MPc predominantly using the notch OVc serving as an orifice. Therefore, it is possible to exert a larger damping force, compared to the damping force generated by forming a gap between the contraction-side leaf valve Vc and the contraction-side valve seat 11c.

Meanwhile, if the piston speed becomes fast, the pressure of the contraction-side chamber 14 applied to the contraction-side leaf valve Vc through the contraction-side main passage MPc increases and exceeds the biasing force that separates the contraction-side leaf valve Vc from the contraction-side valve seat 11c by virtue of the pressure of the contraction-side chamber 14, the whole contraction-side leaf valve Vc recedes from the piston 1 1 and pushes up the contraction-side annular plate 82, the subsidiary valve 101, and the contraction-side spool Sc in FIG. 12, so that it separates from the contraction-side valve seat 11c. However, since the biasing force is strong, compared to a situation in which the damping force characteristic has a soft setting, the recession length of the contraction-side leaf valve Vc from the piston 11 is reduced. If the piston speed becomes fast, and the pressure of the contraction-side chamber 14 further increases, the contraction-side leaf valve Vc, the contraction-side annular plate 82, and the subsidiary valve 101 further recede from the piston 11. In addition, as the subsidiary valve 101 abuts on the contraction-side stopper 83, the contraction-side leaf valve Vc is bent along with the contraction-side annular plate 82 and the subsidiary valve 101, and pushes up the contraction-side spool Sc in FIG. 12, so that a gap is formed between the contraction-side leaf valve Vc and the contraction-side valve seat 11c. That is, the flow passage area between the contraction-side leaf valve Ve and the contraction-side valve seat 11c increases. However, since the biasing force is large, compared to a situation in which the damping force characteristic has a soft setting, the flow passage area between the contraction-side leaf valve Vc and the contraction-side valve seat 11c is reduced compared to a case where the damping force characteristic has a soft setting. Therefore, as indicated by the line Z2 in FIG. 13, the shock absorber D2 exerts a strong damping force in the hard setting compared to the soft setting even under the same piston speed.

Similar to the case where the damping force characteristic has a soft setting, the working oil in the contraction-side chamber 14 forcibly opens the check valve Cic, passes through the contraction-side pressure introduction passage Ic, and also flows to the regulating passage Pc. If the pressure of the upstream side of the regulating passage Pc is controlled by the pressure control valve PV provided in the regulating passage Pc, similar to the soft setting, the contraction-side load can be controlled to a desired load by adjusting the pressure of the contraction-side back-pressure chamber Cc. Even in the hard setting, the opening level of the contraction-side leaf valve Vc, and the contraction-side damping force for performing the contracting operation of the shock absorber D2 is controlled.

In this manner, in the damping valve V2 and the shock absorber D2 according to this embodiment, a gap can be provided between the leaf valves Ve and Vc and the valve seats 11c and 11d, and the whole leaf valves Ve and Vc can recede from the piston 11 in the axial direction. Therefore, it is possible to increase the flow passage area while securing the rigidities of each leaf valve Ve and Vc, compared to the damping valve and the shock absorber of the related art in which a fixed orifice is employed. Therefore, using the damping valve V2 and the shock absorber D2 according to this embodiment, it is possible to reduce the damping force when the damping force characteristic has a soft setting. In addition, when the damping force characteristic has a hard setting, the leaf valves Ve and Vc can sit on the valve seats 11c and 11d, respectively. Therefore, it is possible to secure a damping force variable range using the damping valve V2 and the shock absorber D2.

Therefore, in the damping valve V2 and the shock absorber D2 according to this embodiment, it is possible to reduce a damping force when the damping force characteristic has a soft setting, and widen a damping force control range. In addition, in the shock absorber D2 according to this embodiment, when the damping force characteristic is changed from a soft setting to a hard setting, the pressure of the extension-side back-pressure chamber Ce increases in an extending operation, so that the gap between the extension-side leaf valve Ve and the extension-side valve seat 11d is gradually reduced, and the extension-side leaf valve Ve sits on the extension-side valve seat 11d. In a contracting operation, the pressure of the contraction-side back-pressure chamber Ce increases, so that the gap between the contraction-side leaf valve Vc and the contraction-side valve seat 11c is gradually reduced, and the contraction-side leaf valve Vc sits on the contraction-side valve seat 11c. Reversely, when the damping force characteristic of the shock absorber D2 is changed from a hard setting to a soft setting, the pressure of the extension-side back-pressure chamber Ce is reduced in an extending operation, so that the gap between the extension-side leaf valve Ve and the extension-side valve seat 11d gradually increases. In a contracting operation, the pressure of the contraction-side back-pressure chamber Cc is reduced, and the gap between the contraction-side leaf valve Vc and the contraction-side valve seat 11c gradually increases. For this reason, when the damping force characteristic of the shock absorber D2 is changed from a soft setting to a hard setting or from a hard setting to a soft setting, an abrupt change of the damping force characteristic of the shock absorber D2 is attenuated. Therefore, when the shock absorber D2 is applied to a vehicle, an abrupt change of the damping force characteristic is attenuated. Therefore, it is possible to improve a ride quality of the vehicle without making a passenger feel a shock in switching of the damping force characteristic.

In the damping valve V2, the extension-side annular plate 86 is slidably stacked on the outer circumference of the collar 85 in the back side of the extension-side leaf valve Ve, and the contraction-side annular plate 82 is slidably stacked on the outer circumference of the collar 81 in the back side of the contraction-side leaf valve Vc. As a result, if the rigidity of the extension-side annular plate 86 is set to be higher than that of the extension-side leaf valve Ve, and the rigidity of the contraction-side annular plate 82 is set to be higher than that of the contraction-side leaf valve Vc, it is possible to allow the extension-side annular plate 86 and the contraction-side annular plate 82 to receive the biasing force. Therefore, it is possible to prevent deformation in the extension-side leaf valve Ve and the contraction-side leaf valve Vc. Therefore, it is possible to suppress degradation of the extension-side leaf valve Ve and the contraction-side leaf valve Vc.

The damping valve V2 has the extension-side annular plate 86 slidably mounted on the outer circumference of the collar 81 stacked on the back side of the extension-side leaf valve Ve, and the contraction-side annular plate 82 slidably mounted on the outer circumference of the collar 85 stacked on the back side of the contraction-side leaf valve Vc. In addition, the inner diameter of the extension-side annular plate 86 is set to be smaller than the outer diameter of the inner circumferential seat portion 11h of the piston 11, and the outer diameter of the extension-side annular plate 86 is set to be larger than the inner diameter of the extension-side valve seat 11d. In addition, the inner diameter of the contraction-side annular plate 82 is set to smaller than the outer diameter of the inner circumferential seat portion 11f of the piston 11, and the outer diameter of the contraction-side annular plate 82 is set to be larger than the inner diameter of the contraction-side valve seat 11c. As a result, it is possible to allow the extension-side annular plate 86 and the contraction-side annular plate 82 to receive the pressures of the back sides of the extension-side leaf valve Ve and the contraction-side leaf valve Vc. Therefore, by providing the extension-side annular plate 86 and the contraction-side annular plate 82, it is possible to prevent the extension-side leaf valve Ve and the contraction-side leaf valve Vc from applying an excessive bending force to the piston 11 side.

If the extension-side stopper 87 and the contraction-side stopper 83 are stacked on the collar 81 and 85 to restrict the recession of the extension-side leaf valve Ve, the contraction-side leaf valve Vc, the extension-side annular plate 86, and the contraction-side annular plate 82 from the piston 11, it is possible to adjust the positions of the extension-side chamber 32 and the contraction-side chamber 31.

If the damping valve V2 has the extension-side annular spacer 84 provided between the inner circumferential seat portions 11f of the piston 11 and the contraction-side leaf valve Vc and the contraction-side annular spacer 80 provided between the inner circumferential seat portions 11h and the extension-side leaf valve Ve , it is possible to adjust the height of the gap formed between the extension-side leaf valve Ve and the piston 11 and between the contraction-side leaf valve Vc and the piston 11. Therefore, it is possible to tune the damping force characteristic of the soft setting of the shock absorber D2.

The damping valve V2 biases the leaf valves Ve and Vc using the pressures of the extension-side chamber 13 and the contraction-side chamber 14 of the shock absorber D2. Therefore, it is possible to bias the leaf valves Ve and Vc without employing a biasing force generating source. In addition, it is possible to change the biasing force by performing a pressure control.

In a shock absorber of a vehicle, it is necessary to increase the extension-side damping force in the extending operation, compared to the contraction-side damping force in the contracting operation. For this reason, in the single-rod type shock absorber D2, the pressure-receiving area formed by receiving the pressure of the extension-side chamber 13 becomes the area obtained by subtracting the cross-sectional area of the rod 12 from the cross-sectional area of the piston 11. Therefore, it is necessary to significantly increase the pressure of the extension-side chamber 13 in the extending operation compared to the pressure of the contraction-side chamber 14 in the contracting operation.

However, in the shock absorber D2 according to this embodiment, when the extension-side back-pressure chamber Ce and the contraction-side back-pressure chamber Cc have the same pressure, the extension-side load that biases the extension-side leaf valve Ve is set to be higher than the contraction-side load that biases the contraction-side leaf valve Vc. According to this embodiment, the extension-side spool Se is employed. Therefore, compared to a structure in which the extension-side spool Se is not employed, and the pressure of the extension-side back-pressure chamber Ce is directly applied to the back side of the extension-side leaf valve Ve, it is possible to applies a large extension-side load to the extension-side leaf valve Ve by setting the pressure-receiving area of the extension-side spool Se, to which the pressure of the extension-side back-pressure chamber Ce is applied, to be larger than the area of the back side of the extension-side leaf valve Ve. As a result, in a case where it is necessary to significantly increase the extension-side load when the extension-side damping force is adjusted in an extending operation, it is possible to output a large extension-side load even when the pressure of the extension-side back-pressure chamber Ce is small. Therefore, it is possible to secure a control range of the extension-side damping force without using a large-sized solenoid Sol. In addition, since the extension-side spool Se and the contraction-side spool Sc are employed, it is also possible to improve a degree of freedom in design of the extension-side load and the contraction-side load.

If the pressures of the extension-side back-pressure chamber Ce and the contraction-side back-pressure chamber Cc are not controlled by independent valve bodies, and the extension-side load is set to be larger than the contraction-side load, it is possible to secure a control range of the extension-side damping force even when the pressures of the extension-side back-pressure chamber Ce and the contraction-side back-pressure chamber Cc are controlled by allowing them to communicate with each other. In addition, since only a single electromagnetic valve EV is provided, the structure becomes very simple, and the cost is also reduced.

In this manner, in the damping valve V2, it is possible to miniaturize the solenoid Sol of the electromagnetic valve EV and simplify the structure of the electromagnetic valve EV. In addition, since the solenoid Sol is not necessary to exert a strong drive force to increase the extension-side damping force, it is possible to save the power by reducing the power consumption necessary to increase the damping force. Furthermore, the size of the shock absorber D2 does not increase even when the damping valve V2 is applied to the piston of the shock absorber D2.

Using the shock absorber D2 according to this embodiment, it is possible to simplify and miniaturize the structure of the shock absorber D2. As a result, there is no worry about degradation of mountability to a vehicle.

Since the pressure-receiving area of the extension-side spool Se for receiving the pressure of the extension-side back-pressure chamber Ce is larger than the pressure-receiving area of the contraction-side spool Sc for receiving the contraction-side back-pressure chamber Cc, it is possible to easily set the extension-side load to be larger than the contraction-side load.

There is nearly no resistance in the contraction-side pressure introduction passage Ic, and the working oil is introduced from the contraction-side chamber 14 to the extension-side back-pressure chamber Ce. Therefore, when the shock absorber D2 is switched from the extending operation to the contracting operation, the pressure of the contraction-side chamber 14 is rapidly introduced to the extension-side back-pressure chamber Ce. As a result, the extension-side spool Se presses the extension-side leaf valve Ve by virtue of the pressure of the extension-side back-pressure chamber Ce and the biasing force of the spring MVes, so that it is possible to allow the extension-side leaf valve Ve to rapidly sit on the extension-side valve seat 11d and block the extension-side main passage MPe. In addition, there is nearly no resistance in the extension-side pressure introduction passage Ie, and the working oil is introduced from the extension-side chamber 13 to the contraction-side back-pressure chamber Cc. Therefore, when the shock absorber D2 is switched from the contracting operation to the extending operation, the pressure of the extension-side chamber 13 is rapidly introduced into the contraction-side back-pressure chamber Cc. As a result, the contraction-side spool Sc presses the contraction-side leaf valve Vc by virtue of the pressure of the contraction-side back-pressure chamber Cc and the biasing force of the spring MVcs, so that it is possible to allow the contraction-side leaf valve Vc to rapidly sit on the contraction-side valve seat 11c and block the contraction-side main passage MPc. Therefore, in the shock absorber D2, even when the extension or contraction is fast, and switching of the extension and contraction operations is instantaneous, there is no delay in closing of the extension-side leaf valve Ve and the contraction-side leaf valve Vc, and it is possible to exert a damping force as desired from the start of switching in the extending/contracting direction.

In the shock absorber D2, the piston 11 provided with the extension-side main passage MPe and the contraction-side main passage MPc, the extension-side leaf valve Ve and the contraction-side leaf valve Vc stacked on the piston 11, the tubular extension-side chamber 32 having the inner circumference into which the extension-side spool Se is slidably inserted and forming the extension-side back-pressure chamber Ce, and the tubular contraction-side chamber 31 having the inner circumference into which the contraction-side spool Sc is slidably inserted and forming the contraction-side back-pressure chamber Cc are mounted to the outer circumference of the rod 12. In addition, the contraction-side pressure introduction passage Ic is provided in the extension-side chamber 32, and the extension-side pressure introduction passage Ie is provided in the contraction-side chamber 31. As a result, it is possible to arrange each member for adjusting the damping force in the piston portion of the shock absorber D2 in a concentrated manner.

Biasing of the extension-side spool Se toward the extension-side leaf valve Ve and biasing of the annular plate 35 as a valve body in the check valve Cic that opens and closes the contraction-side pressure introduction passage Ic are performed using a single spring MVes, and biasing of the contraction-side spool Sc toward the contraction-side leaf valve Vc and biasing of the annular plate 39 as a valve body in the check valve Cie that opens and closes the extension-side pressure introduction passage Ie are performed using a single spring MVcs. As a result, it is possible to bias the check valves Cie and Cic and the extension-side spools Se and Sc toward a return side using single springs MVes and MVcs, respectively. Therefore, it is possible to reduce the number of components.

The shock absorber D2 includes the holding shaft 28a that is provided in the tip of the rod 12 and has the outer circumference on which the piston 11, the extension-side leaf valve Ve, the contraction-side leaf valve Vc, the extension-side chamber 32, and the contraction-side chamber 31 are mounted, a vertical hole 28d opened in the tip of the holding shaft 28a, the extension-side pilot orifice Oe as an extension-side resistance element and the contraction-side pilot orifice Oc as a contraction-side resistance element provided in the holding shaft 28a and connected to the communication passage 44 provided in the vertical hole 28d, a housing portion L provided inside the rod 12 and connected to the vertical hole 28d to house the electromagnetic valve EV, the regulating passage Pc that allows the communication passage 44 to communicate with the housing portion L, and the contraction-side pressure discharge passage Ec that allows the housing portion L to communicate with the extension-side chamber 13. The rod 12 has the separator 43 inserted into the vertical hole 28d to form the communication passage 44 that allows the extension-side back-pressure chamber Ce and the contraction-side back-pressure chamber Cc to communicate with each other inside the vertical hole 28d with the annular groove 43a provided in the outer circumference and has the inner circumference provided with the extension-side pressure discharge passage Ee. As a result, in the shock absorber D2, it is possible to appropriately house the electromagnetic valve EV in the rod 12 and provide the extension-side back-pressure chamber Ce and the contraction-side back-pressure chamber Cc in a position deviated from the electromagnetic valve EV in the axial direction.

The shock absorber D2 includes the electromagnetic valve EV that closes the regulating passage Pc in a non-energization state and performs the pressure control in a energization state, and the second failsafe valve FV2 provided in the regulating passage Pc to bypass the electromagnetic valve EV. In addition, the valve-opening pressure of the second failsafe valve FV2 is set to be higher than the maximum control pressure of the electromagnetic valve EV. As a result, in a failure state, the extension-side load and the contraction-side load are maximized, so that the shock absorber D2 can exert the maximum damping force and stabilize a vehicle posture even in a failure state.

Even when the shut-off valve SV is arranged in the upstream of the pressure control valve PV in the pressure control passage PP, and the shut-off valve SV is closed, the first failsafe passage FP1 and the second failsafe passage FP2 are operated effectively, and the failsafe function is not eliminated because the first failsafe passage FP1 that bypasses the shut-off valve SV and the second failsafe passage FP2 that bypasses the electromagnetic valve EV are provided. In addition, in the damping valve V2 according to this embodiment, it is possible to prevent a problem that the damping force control becomes difficult when the state changes to a failure state in a normal state.

In the case of the damping valve V2, the shut-off valve SV and the first failsafe valve FV1 are arranged in parallel. Therefore, while the shut-off valve SV opens the regulating passage Pc in a normal state, the working oil can pass through the shut-off valve SV with a small resistance without influence from the first failsafe valve FV1. In addition, since the valve-opening pressure of the second failsafe valve FV2 is set to be higher than the controllable upper limit pressure of the pressure control valve PV, the second failsafe valve FV2 is not opened while the shut-off valve SV opens the pressure control passage PP. As a result, the back pressures of the extension-side main valve MVe and the contraction-side main valve MVc are regulated by the pressure control valve PV. Therefore, it is possible to control the valve-opening pressures of the extension-side main valve MVe and the contraction-side main valve MVc and adjust the damping force of the shock absorber D2 regardless of the flow-rate/pressure characteristics of the first and second failsafe valves FV1 and FV2.

Meanwhile, in a failure state, the shut-off valve SV shuts off the regulating passage Pc, but the first failsafe valve FV1 allows the working oil to flow by bypassing the shut-off valve SV. As a result, the back pressures of the extension-side main valve MVe and the contraction-side main valve MVc becomes a pressure determined by the flow rate flowing through the first failsafe valve FV1. In addition, when the second failsafe valve FV2 is opened, the back pressures of the extension-side main valve MVe and the contraction-side main valve MVc become a pressure determined by the flow-rate/pressure characteristics of the first failsafe valve FV1 and the second failsafe valve FV2.

In this manner, in the damping valve V2 according to this embodiment, in a normal state, the back pressures applied to the extension-side main valve MVe and the contraction-side main valve MVc are adjusted by the pressure control valve PV regardless of the first and second failsafe valves FV1 and FV2. In a failure state, the back pressures applied to the extension-side main valve MVe and the contraction-side main valve MVc are adjusted to a pressure that depends on the first failsafe valve FV1 or the flow-rate/pressure characteristic and the passing flow rate of the first and second failsafe valves FV1 and FV2.

Therefore, in the damping valve V2 according to this embodiment, the first and second failsafe valves FV1 and FV2 do not influence on the pressure control of the pressure control valve PV in a normal state. Accordingly, it is possible to freely set the variable range of the pressure characteristic against the flow rate in a normal state. In addition, it is possible to freely set the pressure characteristic against the flow rate passing through the first failsafe valve FV1. Furthermore, in the damping valve V2 according to this embodiment, it is possible to solve a problem that the back pressures applied to the extension-side main valve MVe and the contraction-side main valve MVc in a failure state become higher than the pressure of a normal state. Therefore, it is possible to freely set the damping force characteristic in a failure state.

In the damping valve V2, when the piston speed of the shock absorber D2 is slow (low speed) in a failure state, the valve-opening pressures of the extension-side main valve MVe and the contraction-side main valve MVc are controlled by the first failsafe valve FV1 which is an orifice. When the flow rate flowing through the pressure control passage PP increases, that is, when the piston speed is fast (high speed), the second failsafe valve FV2 is opened, so that the valve opening levels of the extension-side main valve MVe and the contraction-side main valve MVc of the main valve MV are controlled by the second failsafe valve FV2. Therefore, the damping force characteristic of the shock absorber D2 provided with the damping valve V2 is set such that the damping force increases as the piston speed increases at a low piston speed, and an increase ratio of the damping force against an increase of the piston speed is reduced compared to the low piston speed state when the piston speed becomes fast, and the second failsafe valve FV2 is opened. In this manner, by providing the second failsafe valve FV2 in addition to the first failsafe valve FV1, it is possible to independently set the damping force characteristic of the low piston speed range and the damping force characteristic of the high piston speed range of the shock absorber D2 in a failure state. Therefore, it is possible to improve a degree of freedom in setting of the damping force characteristic and improve a ride quality of a vehicle even in a failure state.

The electromagnetic valve EV includes the valve seat member 50 having the valve housing tube 50a provided with the access port 50c to form a part of the regulating passage Pc and the annular control valve seat 50d provided in the end of the valve housing tube 50a, the small-diameter portion 51a slidably inserted into the valve housing tube 50a, the large-diameter portion 51b, the recess 51c provided between the small-diameter portion 51a and the large-diameter portion 51b to face the access port 50c, and the valve body 51 that allows the end of the large-diameter portion 51b to separate from or sit on the control valve seat 50d. The regulating passage Pc is shut off by positioning the small-diameter portion 51a to face the access port 50c. The pressure-receiving area of the surface where the pressure is applied in the direction in which the valve body 51 separates from the valve seat member 50 equals to an area obtained by subtracting the area of the circle obtained by setting the outer diameter of the small-diameter portion 51a as a diameter from the area of the circle obtained by setting the inner diameter of the control valve seat 50d as a diameter. Therefore, it is possible to significantly reduce the pressure-receiving area and increase the flow passage area for the valve opening state. Accordingly, a movement of the valve body 51 is stabilized. Furthermore, since the access port 50c is blocked by allowing the outer circumference of the small-diameter portion 51a to face the access port 50c, the valve is still closed in the shut-off position even when the pressure from the upstream side is received. Therefore, it is possible to enable only the first and second failsafe valves FV1 and FV2.

The configuration, operation, and effects of the embodiment of the invention configured in this manner will be described in summary.

The damping valves V1 and V2 include the electromagnetic valve EV having the pressure control passage PP, the pressure control valve PV that controls the pressure of the upstream side of the pressure control passage PP, the shut-off valve SV integrated into the pressure control valve PV and provided in the upstream side of the pressure control valve PV of the pressure control passage PP to open and close the pressure control passage PP, and the single solenoid Sol that controls the pressure control valve PV and the shut-off valve SV, the first failsafe passage FP1 that branches from the upstream of the shut-off valve SV and is connected between the shut-off valve SV of the pressure control passage PP and the pressure control valve PV of the pressure control passage PP, and the first failsafe valve FV1 provided in the first failsafe passage FP1 to apply a resistance to a flow of the fluid passing therethrough. When the solenoid Sol is not energized, the pressure control valve PV opens the pressure control passage PP and the shut-off valve SV closes the pressure control passage PP.

In this configuration, the first failsafe valve FV1 is provided in the first failsafe passage FP1 that branches from the upstream of the shut-off valve SV of the pressure control passage PP and is connected between the shut-off valve SV and the pressure control valve PV of the pressure control passage PP. As a result, in a normal state, it is possible to adjust the damping force using the pressure control valve PV regardless of the valve-opening pressure of the first failsafe valve FV1. In a failure state, the damping force can be adjusted to a pressure that depends on the flow-rate/pressure characteristic of the first failsafe valve FV1 and the passing flow rate. That is, the operation of the normal state is not influenced even when the damping force characteristic of the first failsafe valve FV1 is adjusted. Therefore, it is possible to freely set the damping force characteristic of the failure state.

The damping valve V2 further has the second failsafe passage FP2 that branches from the upstream of the electromagnetic valve EV of the pressure control passage PP and bypasses the electromagnetic valve EV, and the second failsafe valve FV2 provided in the second failsafe passage FP2 to apply a resistance to a flow of the fluid passing therethrough.

In this configuration, it is possible to independently set the damping force characteristic of the low piston speed range and the damping force characteristic of the high piston speed range of the shock absorber D2 in a failure state. Therefore, it is possible to improve a degree of freedom in setting of the damping force characteristic.

In the damping valves V1 and V2, the pressure characteristic against the flow rate of the first failsafe valve FV1 is set within a pressure control range of the electromagnetic valve EV.

In this configuration, it is possible to generate a damping force in a failure state with a damping force characteristic close to a state in which the shock absorbers D1 and D2 are normally operated. Therefore, the damping force characteristic is not abruptly changed when the state changes to a failure mode.

In the damping valve V2, the valve-opening pressure of the second failsafe valve FP2 is set to be higher than the upper limit pressure that can be controlled by the electromagnetic valve EV.

In this configuration, the second failsafe valve FV2 is not opened while the shut-off valve SV opens the pressure control passage PP. As a result, it is possible to control the valve-opening pressures of the main valves MV, MVc, and MVe regardless of the flow-rate/pressure characteristic of the second failsafe valve FP2.

The damping valves V1 and V2 have the main passages MP, MPc, and MPe and the main valves MV, MVc, and MVe provided in the main passages MP, MPc, and MPe to open and close the main passages MP, MPc, and MPe. The pressure control passage PP has an orifice O in the upstream of the shut-off valve SV. The upstream and downstream of the main valves MV, MVc, and MVe of the main passages MP, MPc, and MPe are connected to each other, and the pressure between the orifice O and the shut-off valve SV is guided as a back pressure for biasing the main valves MV, MVc, and MVe toward a valve close direction, so that the first failsafe passage FP1 branches from between the orifice O of the pressure control passage PP and the shut-off valve SV.

In this configuration, it is possible to control the back pressures applied to the main valves MV, MVc, and MVe using the pressure control valve PV without influence from the first failsafe valve FV1. It is possible to increase amplification levels of the valve-opening pressures of the main valves MV, MVc, and MVe against the back pressures by increasing the pressure-receiving area of the main valves MV, MVc, and MVe to which the back pressures are applied. Therefore, it is possible to reduce the maximum output power of the solenoid Sol for controlling the electromagnetic valve EV. As a result, it is possible to secure a wide damping force adjustment range even by using a small solenoid and miniaturize the damping valve. In addition, even when the damping valve is applied to the shock absorber having a restricted mount space, it is possible to provide excellent mountability of the shock absorber on a vehicle.

In the damping valve V2, the main passage includes the extension-side main passage MPe and the contraction-side main passage MPc that allow the extension-side chamber 13 and the contraction-side chamber 14 partitioned inside the cylinder 10 of the shock absorber D2 to communicate with each other. The main valves MVc and MVe includes the extension-side main valve MVe provided in the extension-side main passage MPe to apply a resistance to a flow of the fluid directed from the extension-side chamber 13 to the contraction-side chamber 14 and the contraction-side main valve MVc provided in the contraction-side main passage MPc to apply a resistance to a flow of the fluid directed from the contraction-side chamber 14 to the extension-side chamber 13. The back pressures for biasing the extension-side main valve MVe and the contraction-side main valve MVc are controlled by the pressure control valve PV.

In this configuration, by increasing the pressure-receiving areas of the extension-side main valve MVe and the contraction-side main valve MVc to which the back pressures are applied, it is possible to increase amplification levels of the valve-opening pressures of the extension-side main valve MVe and the contraction-side main valve MVc against the back pressures. Therefore, it is possible to reduce the maximum output power of the solenoid Sol for controlling the electromagnetic valve EV. In addition, it is possible to secure a wide damping force adjustment range even using a small solenoid and miniaturize the damping valve V2. As a result, even when the damping valve is applied to the shock absorber having a restricted mount space, it is possible to provide excellent mountability of the shock absorber on a vehicle. Furthermore, it is possible to easily exert the damping force necessary in the shock absorber of a vehicle by setting the pressure-receiving area of the back pressure of the extension-side main valve MVe to be larger than the pressure-receiving area of the back pressure of the contraction-side main valve MVc.

The shock absorbers D1 and D2 include the cylinder 10, the contraction-side chamber 14 and the extension-side chamber 13 partitioned inside the cylinder 10 by the piston 11 slidably inserted into the cylinder 10, the rod 12 movably inserted into the cylinder 10 and connected to the piston 11, and the damping valves V1 and V2.

Embodiments of this invention were described above, but the above embodiments are merely examples of applications of this invention, and the technical scope of this invention is not limited to the specific constitutions of the above embodiments.

This application claims priority based on Japanese Patent Application No.2015-1 39623 filed with the Japan Patent Office on July 13, 2015, the entire contents of which are incorporated into this specification.

## Claims

1. A damping valve comprising:
a pressure control passage;
an electromagnetic valve having:
a pressure control valve that is configured to control a pressure of an upstream side of the pressure control passage;
a shut-off valve integrated into the pressure control valve and provided in an upstream side of the pressure control valve of the pressure control passage to open and close the pressure control passage; and
a single solenoid that is configured to control the pressure control valve and the shut-off valve;
a first failsafe passage that branches from an upstream of the shut-off valve of the pressure control passage and is connected between the shut-off valve and the pressure control valve of the pressure control passage; and
a first failsafe valve provided in the first failsafe passage to apply a resistance to a flow of fluid passing therethrough;
wherein, when the solenoid is not energized, the pressure control valve is configured to open the pressure control passage and the shut-off valve is configured to close the pressure control passage.

2. The damping valve according to claim 1, further comprising:
a second failsafe passage that branches from an upstream of the electromagnetic valve of the pressure control passage and bypasses the electromagnetic valve; and
a second failsafe valve provided in the second failsafe passage to apply a resistance to a flow of fluid passing therethrough.

3. The damping valve according to claim 1, wherein a pressure characteristic of the first failsafe valve against a flow rate is set within a pressure control range of the electromagnetic valve.

4. The damping valve according to claim 2, wherein a valve-opening pressure of the second failsafe valve is set to be higher than an upper limit pressure controllable by the electromagnetic valve.

5. The damping valve according to claim 1, further comprising:
a main passage; and
a main valve provided in the main passage to open and close the main passage,
wherein the pressure control passage has an orifice in an upstream of the shut-off valve to connect an upstream and a downstream of the main valve of the main passage and guide a pressure between the orifice and the shut-off valve as a back pressure to bias the main valve toward a close direction, and
the first failsafe passage branches from between the orifice of the pressure control passage and the shut-off valve.

6. The damping valve according to claim 5, wherein the main passage has an extension-side main passage and a contraction-side main passage that allow an extension-side chamber and a contraction-side chamber partitioned inside the cylinder of the shock absorber to communicate with each other,
the main valve has
an extension-side main valve provided in the extension-side main passage to apply a resistance to a flow of fluid directed from the extension-side chamber to the contraction-side chamber, and
a contraction-side main valve provided in the contraction-side main passage to apply a resistance to a flow of fluid directed from the contraction-side chamber to the extension-side chamber, and
the back pressures for biasing the extension-side main valve and the contraction-side main valve are controlled by the pressure control valve.

7. A shock absorber comprising:
a cylinder;
an extension-side chamber and a contraction-side chamber partitioned inside the cylinder by a piston slidably inserted into the cylinder;
a rod movably inserted into the cylinder and connected to the piston; and
the damping valve according to claim 1.
